(19) Europäisches Patentamt
European Patent Office
Office européen des brevets

(11) **EP 4 780 102 A1**

(12) **EUROPEAN PATENT APPLICATION**
published in accordance with Art. 153(4) EPC

(43) Date of publication:
**22.07.2026 Bulletin 2026/30**

(21) Application number: **24870241.7**

(22) Date of filing: **23.08.2024**

(51) International Patent Classification (IPC):
**H04W 72/044** $^{(2023.01)}$

(52) Cooperative Patent Classification (CPC):
**H04L 5/00; H04W 72/044; H04W 72/0446;
H04W 72/0453; H04W 72/1273**

(86) International application number:
**PCT/CN2024/114135**

(87) International publication number:
**WO 2025/066695 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023 CN 202311240906**

(71) Applicant: HUAWEI TECHNOLOGIES CO., LTD.
**Shenzhen, Guangdong 518129 (CN)**

(72) Inventors:
• YAN, Mao
**Shenzhen, Guangdong 518129 (CN)**
• LIU, Fengwei
**Shenzhen, Guangdong 518129 (CN)**
• WANG, Xiaona
**Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) This application provides a communication method and a communication apparatus. The method may include: A network device sends N synchronization signals, where N is an integer greater than 1. The network device sends M PDCCHs, and a terminal device jointly receives the M PDCCHs. The M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1. According to this application, the information carried on the M PDCCHs is the same, and therefore, the terminal device may jointly receive the M PDCCHs. This can enhance transmission performance.

_600_

A network device sends N SSBs — 610

The network device sends M PDCCHs, where the M PDCCHs are used to schedule system information corresponding to the N SSBs or N beams, the system information corresponding to the N SSBs or the N beams is system information sent in a same time window, and information carried on the M PDCCHs is the same — 620

FIG. 6

**Description**

This application claims priority to Chinese Patent Application No. 202311240906.6, filed with the China National Intellectual Property Administration on September 25, 2023 and entitled "COMMUNICATION METHOD AND COMMUNICATION APPARATUS", which is incorporated herein by reference in its entirety.

**TECHNICAL FIELD**

This application relates to the field of communication technologies, and more specifically, to a communication method and a communication apparatus.

**BACKGROUND**

In wireless communication, a network device may periodically broadcast a synchronization signal, and a terminal device may receive the synchronization signal. The terminal device receives a physical downlink control channel (physical downlink control channel, PDCCH) based on the synchronization signal, and receives a physical downlink shared channel (physical downlink shared channel, PDSCH) scheduled by using the PDCCH. The terminal device may learn, by using the PDSCH, of system information carried on the PDSCH, and may further perform a corresponding operation based on the system information, for example, obtain configuration information of a random access resource, to perform random access. For a system information transmission scenario of a multi-beam system, how to perform transmission of system information is a problem worth considering.

**SUMMARY**

This application provides a communication method and a communication apparatus, to implement multi-beam system information joint reception, and enhance transmission performance.

According to a first aspect, a communication method is provided. The method may be performed by an apparatus. The apparatus may be a network device, or may be a component (for example, a chip, a chip system, or a circuit) of the network device. This is not limited in this application. The following uses the network device as an example for description.

The method may include: The network device sends N synchronization signals, where N is an integer greater than 1. The network device sends M physical downlink control channels PDCCHs, where the M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1.

The N beams are beams corresponding to the N synchronization signals.

For example, M=N.

According to the foregoing technical solution, the information carried on the M PDCCHs used to schedule the system information of the N synchronization signals (or the N beams) is the same. In this case, the receiving side may perform joint reception (or referred to as joint detection) on the N PDCCHs. This can enhance transmission performance and improve user experience.

With reference to the first aspect, in some implementations of the first aspect, information carried on each of the M PDCCHs includes at least one of the following: a modulation and coding scheme, time domain resource allocation, frequency domain resource allocation, a redundancy version, a new data indicator, a resource mapping mode, or a demodulation reference signal symbol position.

With reference to the first aspect, in some implementations of the first aspect, the method further includes: The network device sends N PDSCHs, where the N PDSCHs include the system information corresponding to the N synchronization signals or the N beams.

According to the foregoing technical solution, the system information is carried on the PDSCHs, and the information carried on the PDCCHs may include scheduling information of the PDSCHs. The information carried on the PDCCHs is the same, that is, the scheduling information of the PDSCHs is the same. Because the scheduling information of the N PDSCHs is the same, the receiving side may jointly receive the N PDSCHs, to enhance transmission performance and improve user experience.

With reference to the first aspect, in some implementations of the first aspect, the N PDSCHs include a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or a value of N.

According to the foregoing technical solution, an index of a redundancy version of a PDSCH may be associated with at least one of the foregoing items. For example, an index of a redundancy version of a PDSCH is associated with an index of a synchronization signal. In this way, redundancy version indexes of PDSCHs corresponding to different synchronization signals are different, so that PDSCH transmission performance is enhanced. For another example, an index of a redundancy version of a PDSCH is associated with the value of N. In this way, redundancy version indexes of different PDSCHs are the same, so that joint reception by the receiving side is simpler.

With reference to the first aspect, in some implementations of the first aspect, redundancy versions of all of the N PDSCHs are the same.

According to the foregoing technical solution, indexes of redundancy versions of all of the PDSCHs are the same, so that joint reception by the receiving side is simpler.

With reference to the first aspect, in some implementations of the first aspect, the method further includes: The network device sends first indication information, where the first indication information indicates the value of N.

With reference to the first aspect, in some implementations of the first aspect, the first indication information is any one of the following: the synchronization signal, a demodulation reference signal corresponding to the PDCCH, a demodulation reference signal corresponding to the PDSCH, or a demodulation reference signal corresponding to the synchronization signal.

With reference to the first aspect, in some implementations of the first aspect, the value of N is any one of the following: 2, 4, 6, or 8.

With reference to the first aspect, in some implementations of the first aspect, the method further includes: The network device sends second indication information, where the second indication information indicates that the information carried on the M PDCCHs is the same, or the second indication information indicates to jointly receive the M PDCCHs.

According to the foregoing technical solution, the network device may notify the receiving side whether to jointly receive the M PDCCHs, so that the receiving side directly determines, based on the second indication information, whether to jointly receive the M PDCCHs.

With reference to the first aspect, in some implementations of the first aspect, the second indication information is any one of the following: the synchronization signal, a demodulation reference signal corresponding to the PDCCH, a demodulation reference signal corresponding to the PDSCH, or a demodulation reference signal corresponding to the synchronization signal.

With reference to the first aspect, in some implementations of the first aspect, the N synchronization signals meet any one of the following: Time domain resources occupied by two adjacent synchronization signals in the N synchronization signals are adjacent; there is a same interval between time domain resources occupied by two adjacent synchronization signals in the N synchronization signals; indexes of two adjacent synchronization signals in the N synchronization signals are adjacent; or there is a same interval between indexes of two adjacent synchronization signals in the N synchronization signals.

With reference to the first aspect, in some implementations of the first aspect, all of the M PDCCHs are the same in at least one of the following corresponding information: a frequency domain resource position, a mapped resource position, a quantity of mapped resources, and a time domain resource position.

According to a second aspect, a communication method is provided. The method may be performed by an apparatus. The apparatus may be a terminal device, or may be a component (for example, a chip, a chip system, or a circuit) of the terminal device. This is not limited in this application. The following uses the terminal device as an example for description.

The method may include: The terminal device receives N synchronization signals, where N is an integer greater than 1. The terminal device receives M physical downlink control channels PDCCHs, where the M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1.

With reference to the second aspect, in some implementations of the second aspect, information carried on each of the M PDCCHs includes at least one of the following: a modulation and coding scheme, time domain resource allocation, frequency domain resource allocation, a redundancy version, a new data indicator, a resource mapping mode, or a demodulation reference signal symbol position.

With reference to the second aspect, in some implementations of the second aspect, the method further includes: The terminal device receives N PDSCHs, where the N PDSCHs include the system information corresponding to the N synchronization signals or the N beams.

With reference to the second aspect, in some implementations of the second aspect, the N PDSCHs include a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or a value of N.

With reference to the second aspect, in some implementations of the second aspect, redundancy versions of all of the N PDSCHs are the same.

With reference to the second aspect, in some implementations of the second aspect, the method further includes: The terminal device receives first indication information, where the first indication information indicates the value of N.

With reference to the second aspect, in some implementations of the second aspect, the first indication information is any one of the following: the synchronization signal, a demodulation reference signal corresponding to the PDCCH, a demodulation reference signal corresponding to the PDSCH, or a demodulation reference signal corresponding to the synchronization signal.

With reference to the second aspect, in some implementations of the second aspect, the value of N is any one of the following: 2, 4, 6, or 8.

With reference to the second aspect, in some implementations of the second aspect, the method further includes: The terminal device receives second indication information, where the second indication information indicates that the information carried on the M PDCCHs is the same, or the second indication information indicates to jointly receive the M PDCCHs; or the terminal device determines to jointly receive the M PDCCHs.

With reference to the second aspect, in some implementations of the second aspect, the second indication information is any one of the following: the synchronization signal, a demodulation reference signal corresponding to the PDCCH, a demodulation reference signal corresponding to the PDSCH, or a demodulation reference signal corresponding to the synchronization signal.

With reference to the second aspect, in some implementations of the second aspect, the N synchronization signals meet any one of the following: Time domain resources occupied by two adjacent synchronization signals in the N synchronization signals are adjacent; there is a same interval between time domain resources occupied by two adjacent synchronization signals in the N synchronization signals; indexes of two adjacent synchronization signals in the N synchronization signals are adjacent; or there is a same interval between indexes of two adjacent synchronization signals in the N synchronization signals.

With reference to the second aspect, in some implementations of the second aspect, all of the M PDCCHs are the same in at least one of the following corresponding information: a frequency domain resource position, a mapped resource position, a quantity of mapped resources, and a time domain resource position.

For beneficial effects of the second aspect, refer to the related descriptions of the first aspect. Details are not described herein again.

According to a third aspect, a communication method is provided. The method may be performed by an apparatus. The apparatus may be a network device, or may be a component (for example, a chip, a chip system, or a circuit) of the network device. This is not limited in this application. The following uses the network device as an example for description.

The method may include: The network device sends at least one piece of third indication information, where the at least one piece of third indication information indicates scheduling information of each of N physical downlink shared channels PDSCHs, the N PDSCHs include system information corresponding to N synchronization signals or N beams, the system information corresponding to the N synchronization signals or the N beams is system information sent in a same time window, the third indication information includes at least one of the following: the synchronization signal, a demodulation reference signal corresponding to the PDSCH, or a demodulation reference signal corresponding to the synchronization signal, and N is an integer greater than 1. The network device sends the N PDSCHs.

The third indication information is information other than a PDCCH.

According to the foregoing technical solution, the system information may be transmitted without using a PDCCH. In other words, the scheduling information of the PDSCH may be scheduled by using other information than the PDCCH (namely, the third indication information), and does not need to be scheduled by using the PDCCH. Therefore, the network device does not need to send the PDCCH. In this way, a resource originally used to transmit the PDCCH is used to transmit the PDSCH, so that a coverage rate is increased.

With reference to the third aspect, in some implementations of the third aspect, the scheduling information of each of the N PDSCHs includes at least one of the following: a modulation and coding scheme, time domain resource allocation, frequency domain resource allocation, a redundancy version, a new data indicator, a resource mapping mode, or a demodulation reference signal symbol position.

With reference to the third aspect, in some implementations of the third aspect, the N PDSCHs include a first PDSCH, and a frequency domain resource position of the first PDSCH is associated with a frequency domain resource position of a synchronization signal corresponding to the first PDSCH.

According to the foregoing technical solution, a frequency domain resource position of a PDSCH corresponding to a synchronization signal may be determined based on a frequency domain resource position of the synchronization signal, to reduce signaling overheads caused by separately notifying the frequency domain resource position of the PDSCH.

With reference to the third aspect, in some implementations of the third aspect, that a frequency domain resource of the first PDSCH is associated with a frequency domain resource of the synchronization signal corresponding to the first PDSCH includes: A start position of a frequency domain resource of the first PDSCH is the same as a start position of a frequency domain resource of the synchronization signal corresponding to the first PDSCH; or an end position of a frequency domain resource of the first PDSCH is determined based on a start position of a frequency domain resource of the synchronization signal corresponding to the first PDSCH and scheduling bandwidth information indicated by the synchronization signal corresponding to the first PDSCH.

With reference to the third aspect, in some implementations of the third aspect, the method further includes: The network device sends first indication information, where the first indication information indicates a value of N.

With reference to the third aspect, in some implementations of the third aspect, the first indication information is any one of the following: the synchronization signal, a demodulation reference signal corresponding to the PDSCH, or a demodulation reference signal corresponding to the synchronization signal.

With reference to the third aspect, in some implementations of the third aspect, the value of N is any one of the following: 2, 4, 6, or 8.

With reference to the third aspect, in some implementations of the third aspect, the method further includes: The network device sends fourth indication information, where the fourth indication information indicates whether the network device sends physical downlink control information PDCCH used to schedule the N PDSCHs.

According to the foregoing technical solution, the network device may notify a receiving side whether a PDSCH is scheduled by using the PDCCH, or whether a PDSCH is scheduled by using the PDCCH or by using the third indication information. In this way, the receiving side can detect the PDSCH.

With reference to the third aspect, in some implementations of the third aspect, the fourth indication information is any one of the following: the synchronization signal, a demodulation reference signal corresponding to the PDSCH, or a demodulation reference signal corresponding to the synchronization signal.

With reference to the third aspect, in some implementations of the third aspect, the N PDSCHs include a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or the value of N.

With reference to the third aspect, in some implementations of the third aspect, scheduling information of all of the N PDSCHs is the same.

According to the foregoing technical solution, because the scheduling information of the N PDSCHs is the same, the receiving side may jointly receive the N PDSCHs, to enhance transmission performance and improve user experience.

According to a fourth aspect, a communication method is provided. The method may be performed by an apparatus. The apparatus may be a terminal device, or may be a component (for example, a chip, a chip system, or a circuit) of the terminal device. This is not limited in this application. The following uses the terminal device as an example for description.

The method may include: The terminal device receives at least one piece of third indication information, where the at least one piece of third indication information indicates scheduling information of each of N physical downlink shared channels PDSCHs, the N PDSCHs include system information corresponding to N synchronization signals or N beams, the system information corresponding to the N synchronization signals or the N beams is system information sent in a same time window, the third indication information includes at least one of the following: the synchronization signal, a demodulation reference signal corresponding to the PDSCH, or a demodulation reference signal corresponding to the synchronization signal, and N is an integer greater than 1. The terminal device receives the N PDSCHs based on the at least one piece of third indication information.

With reference to the fourth aspect, in some implementations of the fourth aspect, the scheduling information of each of the N PDSCHs includes at least one of the following: a modulation and coding scheme, time domain resource allocation, frequency domain resource allocation, a redundancy version, a new data indicator, a resource mapping mode, or a demodulation reference signal symbol position.

With reference to the fourth aspect, in some implementations of the fourth aspect, the N PDSCHs include a first PDSCH, and a frequency domain resource position of the first PDSCH is associated with a frequency domain resource position of a synchronization signal corresponding to the first PDSCH.

With reference to the fourth aspect, in some implementations of the fourth aspect, that a frequency domain resource of the first PDSCH is associated with a frequency domain resource of the synchronization signal corresponding to the first PDSCH includes: A start position of a frequency domain resource of the first PDSCH is the same as a start position of a frequency domain resource of the synchronization signal corresponding to the first PDSCH; or an end position of a frequency domain resource of the first PDSCH is determined based on a start position of a frequency domain resource of the synchronization signal corresponding to the first PDSCH and scheduling bandwidth information indicated by the synchronization signal corresponding to the first PDSCH.

With reference to the fourth aspect, in some implementations of the fourth aspect, the method further includes: The terminal device receives first indication information, where the first indication information indicates a value of N.

With reference to the fourth aspect, in some implementations of the fourth aspect, the first indication information is any one of the following: the synchronization signal, a demodulation reference signal corresponding to the PDSCH, or a demodulation reference signal corresponding to the synchronization signal.

With reference to the fourth aspect, in some implementations of the fourth aspect, the value of N is any one of the following: 2, 4, 6, or 8.

With reference to the fourth aspect, in some implementations of the fourth aspect, the method further includes: The terminal device receives fourth indication information, where the fourth indication information indicates whether the network device sends physical downlink control information PDCCH used to schedule the N PDSCHs.

With reference to the fourth aspect, in some implementations of the fourth aspect, the fourth indication information is any one of the following: the synchronization signal, a demodulation reference signal corresponding to the PDSCH, or a demodulation reference signal corresponding to the synchronization signal.

With reference to the fourth aspect, in some implementations of the fourth aspect, the N PDSCHs include a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or the value of N.

With reference to the fourth aspect, in some implementations of the fourth aspect, scheduling information of all of the N PDSCHs is the same.

For beneficial effects of the fourth aspect, refer to the related descriptions of the third aspect. Details are not described herein again.

According to a fifth aspect, a communication method is provided. The method may be performed by an apparatus. The apparatus may be a network device, or may be a component (for example, a chip, a chip system, or a circuit) of the network device. This is not limited in this application. The following uses the network device as an example for description.

The method may include: The network device determines scheduling information of N physical downlink shared channels PDSCHs, where the N PDSCHs include system information corresponding to N synchronization signals or N beams, the system information corresponding to the N synchronization signals or the N beams is system information sent in a same time window, the scheduling information of all of the N PDSCHs is the same, and N is an integer greater than 1. The network device sends the N PDSCHs.

According to the foregoing technical solution, because the scheduling information of the N PDSCHs is the same, the receiving side may jointly receive the N PDSCHs, to enhance transmission performance and improve user experience.

With reference to the fifth aspect, in some implementations of the fifth aspect, the method further includes: The network device sends M physical downlink control channels PDCCHs, where the M PDCCHs are used to schedule the system information corresponding to the N synchronization signals or the N beams, information carried on the M PDCCHs is the same, and M is an integer greater than or equal to 1.

For this solution, refer to the first aspect. Details are not described herein again.

With reference to the fifth aspect, in some implementations of the fifth aspect, the method further includes: The network device sends at least one piece of third indication information, where the at least one piece of third indication information indicates scheduling information of each of the N PDSCHs.

For this solution, refer to the third aspect. Details are not described herein again.

With reference to the fifth aspect, in some implementations of the fifth aspect, the third indication information includes at least one of the following: the synchronization signal, a demodulation reference signal corresponding to the PDSCH, or a demodulation reference signal corresponding to the synchronization signal.

According to a sixth aspect, a communication method is provided. The method may be performed by an apparatus. The apparatus may be a terminal device, or may be a component (for example, a chip, a chip system, or a circuit) of the terminal device. This is not limited in this application. The following uses the terminal device as an example for description.

The method may include: The terminal device determines scheduling information of N physical downlink shared channels PDSCHs, where the N PDSCHs include system information corresponding to N synchronization signals or N beams, the system information corresponding to the N synchronization signals or the N beams is system information sent in a same time window, the scheduling information of all of the N PDSCHs is the same, and N is an integer greater than 1. The terminal device receives the N PDSCHs.

With reference to the sixth aspect, in some implementations of the sixth aspect, the method further includes: The terminal device receives M physical downlink control channels PDCCHs, where the M PDCCHs are used to schedule the system information corresponding to the N synchronization signals or the N beams, information carried on the M PDCCHs is the same, and M is an integer greater than or equal to 1.

With reference to the sixth aspect, in some implementations of the sixth aspect, the method further includes: The terminal device receives at least one piece of third indication information, where the at least one piece of third indication information indicates scheduling information of each of the N PDSCHs.

With reference to the sixth aspect, in some implementations of the sixth aspect, the third indication information includes at least one of the following: the synchronization signal, a demodulation reference signal corresponding to the PDSCH, or a demodulation reference signal corresponding to the synchronization signal.

For beneficial effects of the sixth aspect, refer to the related descriptions of the fifth aspect. Details are not described herein again.

According to a seventh aspect, a communication apparatus is provided. The apparatus is configured to perform the method according to any one of the first aspect to the sixth aspect. Specifically, the apparatus may include a unit and/or a module, for example, a processing unit and/or a communication unit, configured to perform the method according to any implementation of any one of the first aspect to the sixth aspect.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is a chip, a chip system, or a circuit used in the communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method according to any implementation of any one of the first aspect to the sixth aspect.

In an implementation, the apparatus is a communication device (for example, a terminal device or a network device).

In another implementation, the apparatus is a chip, a chip system, or a circuit used in the communication device.

According to a ninth aspect, this application provides a processor, configured to perform the methods according to the foregoing aspects.

Operations such as sending and obtaining/receiving related to the processor may be understood as operations such as outputting and inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any implementation of any one of the first aspect to the sixth aspect.

According to an eleventh aspect, a computer program product including instructions is provided. When the computer program product runs on a computer, the computer is caused to perform the method according to any implementation of any one of the first aspect to the sixth aspect.

According to a twelfth aspect, a chip is provided. The chip includes a processor and a communication interface. The processor reads, through the communication interface, instructions stored in a memory, to perform the method according to any implementation of any one of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any implementation of any one of the first aspect to the sixth aspect.

According to a thirteenth aspect, a communication system is provided, including a terminal device and a network device. The network device is configured to perform the method according to any implementation of the first aspect, and the terminal device is configured to perform the method according to any implementation of the second aspect; the network device is configured to perform the method according to any implementation of the third aspect, and the terminal device is configured to perform the method according to any implementation of the fourth aspect; or the network device is configured to perform the method according to any implementation of the fifth aspect, and the terminal device is configured to perform the method according to any implementation of the sixth aspect.

## BRIEF DESCRIPTION OF DRAWINGS

FIG. 1 is a diagram of a wireless communication system applicable to an embodiment of this application;
FIG. 2 is a diagram of information transmission applicable to an embodiment of this application;
FIG. 3 is a diagram of a transmission mode of an SSB and a SIB 1;
FIG. 4 is a diagram of transmitting information via different beams;
FIG. 5 is a diagram of a communication method 500 according to an embodiment of this application;

FIG. 6 is a diagram of a communication method 600 according to another embodiment of this application;

FIG. 7 is a diagram of SSB and system information transmission applicable to Solution 1;

FIG. 8 is a diagram of SSB and system information transmission applicable to Solution 2;

FIG. 9 is another diagram of SSB and system information transmission applicable to Solution 2;

FIG. 10 is a diagram of a communication method 1000 according to another embodiment of this application;

FIG. 11 is a diagram of SSB and system information transmission without PDCCH transmission applicable to an embodiment of this application;

FIG. 12 is a schematic flowchart of a communication method 1200 according to an embodiment of this application;

FIG. 13 is a block diagram of a communication apparatus 1300 according to an embodiment of this application;

FIG. 14 is a diagram of another communication apparatus 1400 according to an embodiment of this application; and

FIG. 15 is a diagram of a chip system 1500 according to an embodiment of this application.

## DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a low-frequency scenario, a high-frequency scenario, terahertz, optical communication, and the like. The technical solutions provided in this application may be further applied to a future communication system, for example, a 6th generation (6th Generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system. The technical solutions provided in this application may be further applied to a non-terrestrial communication network (non-terrestrial network, NTN) system such as inter-satellite communication and satellite communication. For example, a satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low Earth orbit satellite, a medium Earth orbit satellite, a high Earth orbit satellite, or the like. Alternatively, the satellite may be a non-terrestrial base station, a non-terrestrial device, or the like.

A device in a communication system may send a signal to another device or receive a signal from another device. The signal may include information, signaling, data, or the like. The device may alternatively be replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device.

A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an unmanned aerial vehicle, a helicopter, a multi-helicopter, a four-helicopter, or an airplane), a ship, a remote control device, a smart home device, an industrial device; may be an apparatus built in the foregoing device (for example, a communication module, a modem, or a chip in the foregoing device); or may be another processing device connected to the wireless modem. For ease of description, an example in which the terminal device is a terminal or UE is used below for description.

It should be understood that, in some scenarios, the UE may further serve as a base station. For example, the UE may serve as a scheduling entity that provides a sidelink signal between UEs in V2X, D2D, P2P, or other scenarios.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be mounted in the terminal device. In this embodiment of this application, the chip system may include a chip, or may include a chip and another discrete component.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point, a master node, a secondary node, a multi-standard radio (multi-standard radio, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Neither of a specific technology and a specific device form used by the network device is limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node.

In embodiments of this application, an apparatus configured to implement a function of the network device may be a network device; or may be an apparatus that can support the network device in implementing the function, for example, a chip system or a chip, where the apparatus may be mounted in the network device. In this embodiment of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

Communication systems suitable for embodiments of this application are first briefly described below.

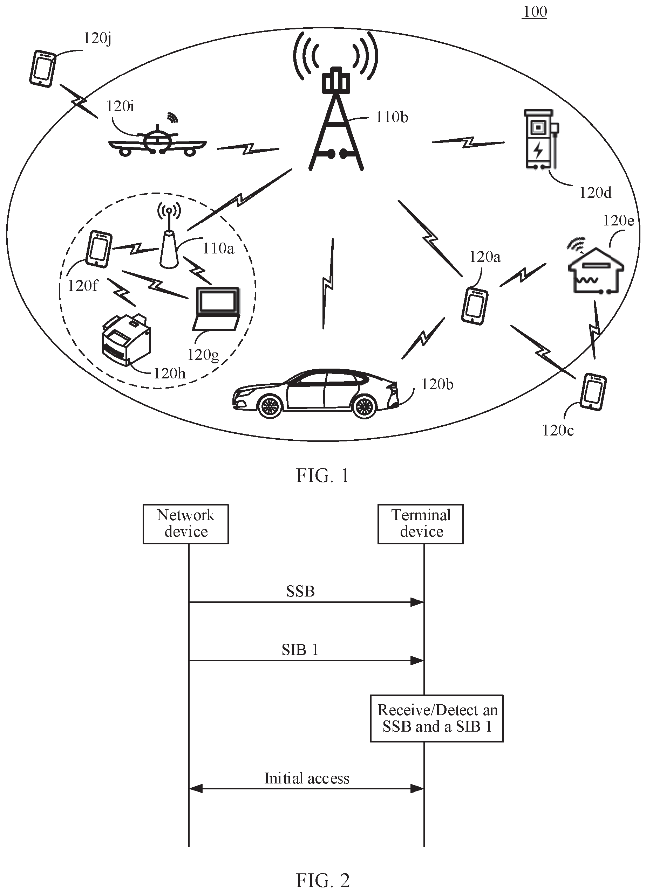

FIG. 1 is a diagram of a wireless communication system applicable to an embodiment of this application.

As shown in FIG. 1, the wireless communication system includes a radio access network 100. The radio access network 100 may be a next generation (for example, 6G or later) radio access network, or a conventional (for example, 5G, 4G, 3G, or 2G) radio access network. One or more terminal devices (120a to 120j, collectively referred to as 120) may be interconnected or connected to one or more network devices (110a and 110b, collectively referred to as 110) in the radio access network 100. Network elements in the wireless communication system are connected by using an interface (for example, NG or Xn) or an air interface.

FIG. 1 is only a diagram. The wireless communication system may further include another device, for example, may further include a core network device, a wireless relay device, and/or a wireless backhaul device, which are not shown in FIG. 1.

For ease of understanding the technical solutions of this application, some related technologies in the technical solutions of this application are described.

1. Antenna port (antenna port): The antenna port is a logical concept, where one antenna port does not directly correspond to one physical antenna. An antenna port is usually associated with a reference signal, and may be understood as a transceiver interface on a channel through which the reference signal passes. For a low-frequency system, one antenna port may correspond to one or more antenna array elements. These array elements jointly send reference signals, and a receiving side may consider the array elements as a whole, without distinguishing between the array elements. For a high-frequency system, an antenna port may correspond to a beam. Similarly, a receiving side may consider the beam as an interface, without distinguishing between array elements.

2. Port group: The port group is a set corresponding to a plurality of antenna ports. In a possible manner, a plurality of digital ports of a network device are grouped, to form a plurality of port groups. In another possible manner (especially in a hybrid digital-analog beam architecture), a port group (or referred to as a digital-analog port group) may be a plurality of digital ports corresponding to a same analog beam; a port group (or referred to as a digital-analog port group) may be a set of digital ports corresponding to a plurality of analog beams; or a plurality of digital ports of a same analog beam are divided into a plurality of subsets, and each subset may be referred to as a port group (or referred to as a digital-analog port group).

3. Beam (beam): The beam is a communication resource. Different beams may be considered as different resources. Same information or different information may be sent via different beams.

The beam in an NR protocol may be embodied as a spatial domain filter (spatial domain filter) that is also referred to as a spatial filter (spatial filter) or a spatial parameter (spatial parameter). A beam used to send a signal may be referred to as a transmit beam (transmit beam, Tx beam), and a beam used to receive a signal may be referred to as a receive beam (receive beam, Rx beam).

The transmit beam may be signal strength distribution formed in different directions in space after a signal is transmitted via an antenna, and the receive beam may be signal strength distribution in different directions in space of a radio signal received from an antenna.

In addition, the beam may be a wide beam, a narrow beam, or a beam of another type. A beam forming technology may be a beamforming technology or another technology. The beamforming technology may be specifically a digital beamforming technology, an analog beamforming technology, a hybrid digital/analog beamforming technology, or the like.

For example, a plurality of beams having a same or similar communication feature may be considered as one beam.

One beam may correspond to one or more antenna ports, and is used to transmit a data channel, a control channel, a sounding signal, and the like. The one or more antenna ports corresponding to the beam may alternatively be considered as one antenna port set.

4. Reference signal: The reference signal may also be referred to as a pilot (pilot), a reference sequence, a reference signal, or the like. For uniformity, the following uses the reference signal for description. The reference signal is a physical signal that carries a sequence and that is sent for implementing a specific function. Specifically, the reference signal is a physical signal generated by mapping a specific sequence to a corresponding resource in a preset resource mapping mode.

For example, uplink communication includes transmission of an uplink physical channel and an uplink signal. The uplink physical channel includes but is not limited to a random access channel (random access channel, PRACH), an uplink control channel (physical uplink control channel, PUCCH), an uplink data channel (physical uplink shared channel, PUSCH), and the like. The uplink signal includes but is not limited to a channel sounding signal (sounding reference signal, SRS), a demodulation reference signal (demodulation reference signal, DMRS), an uplink phase noise tracking reference signal (phase noise tracking reference signal, PTRS), an uplink positioning reference signal (uplink positioning reference signal), and the like. The DMRS includes but is not limited to an uplink control channel demodulation reference signal PUCCH-DMRS and an uplink data channel demodulation reference signal PUSCH-DMRS.

For example, downlink communication includes transmission of a downlink physical channel and a downlink signal. The downlink physical channel includes but is not limited to a broadcast channel (physical broadcast channel, PBCH), a downlink control channel (physical downlink control channel, PDCCH), a downlink data channel (physical downlink shared channel, PDSCH), and the like. The downlink signal includes but is not limited to a primary synchronization signal (primary synchronization signal, PSS)/secondary synchronization signal (secondary synchronization signal, SSS), a DMRS, a PTRS, a channel state information-reference signal (channel state information-reference signal, CSI-RS), a cell signal (cell reference signal, CRS), a fine synchronization signal (time/frequency tracking reference signal, TRS), a positioning reference signal (positioning reference signal), and the like. The DMRS includes but is not limited to a downlink control channel demodulation reference signal PDCCH-DMRS and a downlink data channel demodulation reference signal PDSCH-DMRS.

It should be understood that the foregoing listed reference signals are merely examples, and should not constitute any limitation on this application. This application does not exclude a possibility of defining another reference signal in a future protocol to implement a same or similar function.

5. Resource: Data or information may be carried on a resource.

In time domain, a resource may include one or more time domain units (or may be referred to as time units). A time domain unit may be a symbol (symbol), an orthogonal frequency division multiplexing (orthogonal frequency division multiplexing, OFDM) symbol, a mini-slot (mini-slot), a slot (slot), a partial slot (partial slot), a subframe (subframe), a radio frame (frame), or the like.

In frequency domain, the resource may include one or more frequency domain units. One frequency domain unit may be one resource block (resource block, RB), one subcarrier (subcarrier), one resource block group (resource block group, RBG), one subband (subband), one precoding resource block group (precoding resource block group, PRG), one bandwidth part (bandwidth part, BWP), one carrier, one serving cell, or the like.

6. Synchronization signal block (synchronization signal block, SSB): The synchronization signal block is also referred to as a synchronization signal. The synchronization signal block may include at least one of the following: a primary synchronization signal (primary synchronization signal, PSS), a secondary synchronization signal (secondary synchronization signal, SSS), a physical broadcast channel (physical broadcast channel, PBCH), and a demodulation reference signal. For example, the primary synchronization signal and the secondary synchronization signal are referred to as synchronization signals (synchronization signals, SSs).

For example, the SSB may be used for implementing the following functions: (1) cell synchronization and master information block (master information block, MIB) obtaining; and (2) beam training on a network device side. The following provides a brief introduction.

(1) Cell synchronization and MIB obtaining: A PSS and an SSS in the SSB may carry physical cell identifiers (physical cell identifiers, PCIs), and a terminal device obtains the PCIs by detecting the PSS and the SSS. In addition, a PBCH in the SSB may carry an SSB index (index). Each SSB index corresponds to a position at which the SSB is sent. Cell synchronization may be completed by detecting the SSB index and a moment at which the SSB is received. In addition, the PBCH in the SSB may carry a MIB. Therefore, the MIB may also be obtained based on the SSB.

(2) Beam training on a network device side: One SSB pattern (pattern) may include a plurality of SSB indexes, and different SSB indexes correspond to different transmit beams of a network device. The terminal device may select, by detecting the SSB, a transmit beam corresponding to an SSB with good quality, to complete beam training. In addition, the terminal device may also receive a same SSB via a plurality of receive beams, to complete receive beam training on a terminal device side. For ease of description, an example in which the SSB with good quality is an SSB 1, and the SSB 1 corresponds to a transmit beam 1 of the network device is used for further description. Functions of the transmit beam 1 mainly include: (1) The terminal device receives, at a position corresponding to the SSB 1, a system information block 1 (system information block 1, SIB 1) or paging (paging) sent by the network device by using the transmit beam 1, to improve coverage of the SIB 1 or the paging. (2) The terminal device sends a physical random access channel (physical random access channel, PRACH) at the position corresponding to the SSB 1, and the network device may receive the PRACH via the beam 1, to increase a probability of successful PRACH receiving. (3) After the terminal device completes initial access and establishes a radio resource control (radio resource control, RRC) connection, the network device may perform finer-grained beam training based on the beam 1, to reduce overheads of fine beam training.

7. System information: The system information may also be referred to as downlink common data, a downlink common channel, cell broadcast information, or cell common information. For example, the system information may include various system information blocks (system information blocks, SIBs), for example, a SIB 1; or the system information may further include a MIB.

The SIB 1 is usually carried on a PDSCH. Generally, the network device may indicate, to the terminal device by using downlink control information (downlink control information, DCI), a time-frequency position and a transmission parameter of the PDSCH on which the SIB 1 is carried. A candidate time domain position and a candidate frequency domain position of the DCI may be indicated by the MIB.

For example, the MIB includes a control resource set 0 (control resource set 0, CORESET 0) and a common search space 0 (common search space 0, CSS 0), where the CORESET 0 indicates a candidate frequency domain position of DCI for scheduling the SIB 1, and the CSS 0 indicates a candidate time domain position of the DCI for scheduling the SIB 1. The network device may send, on a beam that is the same as a beam for sending an SSB, a SIB 1 corresponding to the SSB. Correspondingly, when receiving the SIB 1, the terminal device may receive, on a beam that is the same as a beam for receiving the SSB, the SIB 1 corresponding to the SSB. The SIB 1 corresponding to the SSB represents that the MIB in the SSB indicates a frequency domain position and a time domain position of the DCI for scheduling the SIB 1.

In a possible understanding, the SIB 1 may be considered as a system message that is first sent after the MIB, the SIB 1 may be considered as a system message including time-frequency resource indication information of a random access channel (random access channel, RACH), or the SIB 1 may be considered as information carried on a PDSCH scheduled by using a PDCCH that is determined based on the CORESET 0 and the CSS 0.

It may be understood that, the foregoing descriptions related to the SIB 1 and the SSB are merely examples for description, and do not limit the protection scope of embodiments of this application.

It may be further understood that, in embodiments of this application, the RACH and the PRACH are sometimes alternately used, and represent a same meaning without emphasizing a difference.

In addition, a downlink control signal and a downlink data signal may be represented by a channel (channel), for example, a PDCCH, a PBCH, or a PDSCH. For higher layers, these channels correspond to resource elements (resource elements, REs) that carry upper-layer (for example, layer 2) bit information. For an air interface, radio signals are carried on these channels. In consideration of channel fading, these channels are usually sent together with DMRSs, so that a receiving side can obtain the channels, perform demodulation, and finally restore the bit information. Generally, these DMRSs also occupy resource elements, but these resource elements do not carry the upper-layer bit information. In addition, there is usually a correspondence between the PDCCH and the PDSCH. Specifically, the PDCCH carries DCI, and the DCI indicates scheduling information (or referred to as configuration information, for example, a transmission parameter like a time-frequency position or modulation information) of the PDSCH.

8. Random access (random access, RA): The terminal device may perform random access by using information included in a SIB 1.

FIG. 2 is a diagram of information transmission applicable to an embodiment of this application. As shown in FIG. 2, a network device may send an SSB and a SIB 1 to a terminal device, and correspondingly, the terminal device receives or detects the SSB and the SIB 1. If the terminal device receives the SSB and the SIB 1, the terminal device may perform initial access.

For example, the following describes a possible random access manner, namely, four-step random access. The four-step random access is merely a name that represents a random access manner, and a specific name of the random access manner does not limit the scope of embodiments of this application. The four-step random access represents that four-step information exchange (Msg1, Msg2, Msg3, and Msg4) needs to be performed between the terminal device and a network device. A basic procedure of a four-step random access process is as follows:

Step 1: The terminal device sends a random access preamble (preamble), which may also be referred to as Msg1, to the network device. For example, the terminal device obtains random access configuration information. The random access configuration information includes a time-frequency resource (for example, denoted as a RACH time-frequency resource) used by the terminal device to send the random access preamble and a sequence used to send the random access preamble, and the terminal device sends the random access preamble to the network device on the time-frequency resource.

For example, the network device may configure a plurality of RACH occasions (occasions). A specific RACH occasion to be selected by the terminal device, a specific preamble to be sent by the terminal device, and a specific transmit beam to be used by the terminal device may be determined based on a measurement result of an SSB index. In a possible implementation, there is a correspondence between the SSB index and {RACH occasion, preamble index}. If the terminal device determines an SSB, the terminal device may determine a corresponding RACH occasion and preamble index. The preamble index represents a sequence index of random access.

For example, the terminal device measures an SSB sent by the network device, for example, measures a reference signal received power (reference signal received power, RSRP) of the SSB. The terminal device may select an SSB index whose RSRP is greater than a preset threshold (where the preset threshold may be configured by a higher layer, or may be defined in a protocol), and determine, based on the correspondence between the SSB index and {RACH occasion, preamble index}, the RACH occasion and a preamble index set that correspond to the SSB index.

Step 2: The network device sends a random access response (random access response, RAR), which may also be referred to as Msg2, to the terminal device. Specifically, after detecting the random access preamble, the network device sends Msg2 to the terminal device.

Step 3: The terminal device sends Msg3 to the network device. Specifically, after receiving Msg2, the terminal device first adjusts uplink timing based on a timing advance instruction, and sends, based on Msg2, an uplink message, which is also referred to as Msg3, on the uplink resource allocated via Msg2. If a plurality of terminal devices select the same random access preamble in step 1, a resource conflict occurs. For example, if a random access preamble of one of the plurality of terminal devices is correctly received by the network device, the network device sends Msg2 to the terminal device, and the plurality of terminal devices each may receive Msg2. The plurality of terminal devices cannot determine, by using Msg2, a terminal device whose random access preamble has been received by the network device. In this case, these terminal devices each may receive Msg2 and separately send Msg3. Therefore, Msg3 includes a unique identifier of the terminal device, and is for resolving the resource conflict.

Step 4: The network device sends a conflict resolution to the terminal device. Specifically, the network device receives Msg3 of the terminal device, and returns the conflict resolution message, which may also be referred to as Msg4, to the terminal device that successfully accesses the network device. The network device includes, in the conflict resolution message, the unique identifier in Msg3, to specify the terminal device that successfully accesses the network device, and another terminal device that fails to access the network device re-initiates random access.

It may be understood that, the foregoing specific procedure related to the random access is an example for description, and does not limit the protection scope of embodiments of this application.

It may be further understood that FIG. 2 is merely a simplified diagram of an example for ease of understanding.

The information transmission procedure may further include more steps, which are not shown in FIG. 2.

The foregoing briefly describes terms used in this application. Details are not described in the following embodiments. In addition, the foregoing descriptions of the terms are merely descriptions for ease of understanding, and do not limit the protection scope of embodiments of this application.

The following describes a current transmission mode of an SSB and a SIB 1.

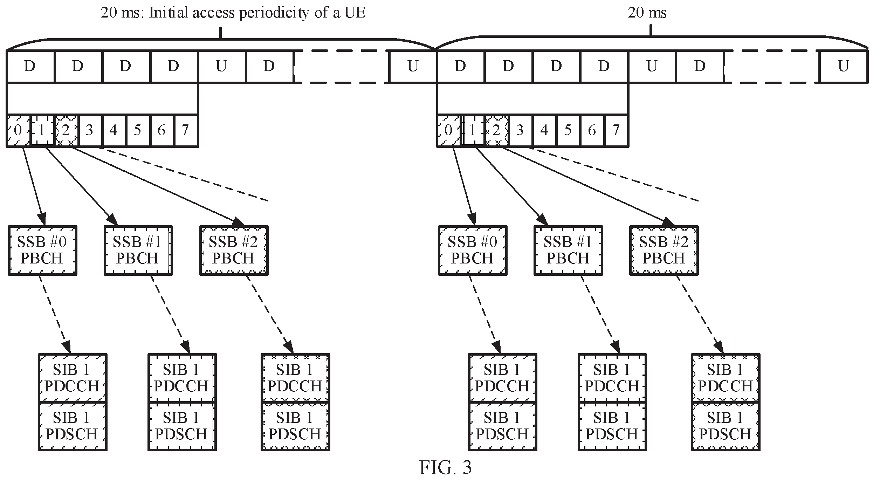

FIG. 3 is a diagram of a transmission mode of an SSB and a SIB 1.

As shown in FIG. 3, eight beams are used as an example to describe a transmission manner of an SSB and a SIB 1. The network device periodically broadcasts an SSB signal, for example, a periodicity is 20 ms, and a slot position of the SSB is fixed. Similarly, the network device periodically broadcasts a SIB 1 signal, including a PDCCH (for example, referred to as a SIB 1 PDCCH) and a PDSCH (for example, referred to as a SIB 1 PDSCH) that correspond to the SIB 1. A candidate slot position corresponding to the SIB 1 PDCCH is determined based on a MIB in the SSB. For example, for an SSB signal whose time index is i, a SIB 1 PDCCH corresponding to the SSB signal is in a slot $n_0$ or a slot $(n_0+1)$. $n_0$ satisfies

the following: $n_0 = \quad (O \times 2^\mu + \lfloor i \times M \rfloor) \bmod N_{slot}^{frame,\mu}$. $\mu$ represents a subcarrier spacing index, $N_{slot}^{frame,\mu}$ represents a quantity of slots within 10 ms, and $O$ and $M$ are constants. Specific values may be indicated by indication information in system information. For example, a value of $O$ may be 0, 2, 2.5, 5, 7, or 7.5. For example, a value of $M$ may be 1 or 2.

Specifically, for the SSB, at a candidate frequency domain position of the SSB, the terminal device detects the SSB at a periodicity of 20 ms. When the terminal device detects the SSB, the terminal device may attempt to detect the SIB 1 PDCCH in the slot $n_0$ or the slot $(n_0+1)$ based on the time index i of the SSB. When detecting the SIB 1 PDCCH, the terminal device continues to receive a corresponding PDSCH, and performs a subsequent process. For example, the terminal device performs random access based on the SIB 1 carried on the PDSCH. Content carried on PDSCHs corresponding to different SSBs is the same, but modulation orders, bit rates, time domain positions, frequency domain positions, and the like of these PDSCHs may be different. In this case, detection can be performed only based on the respective SSBs, causing low transmission efficiency.

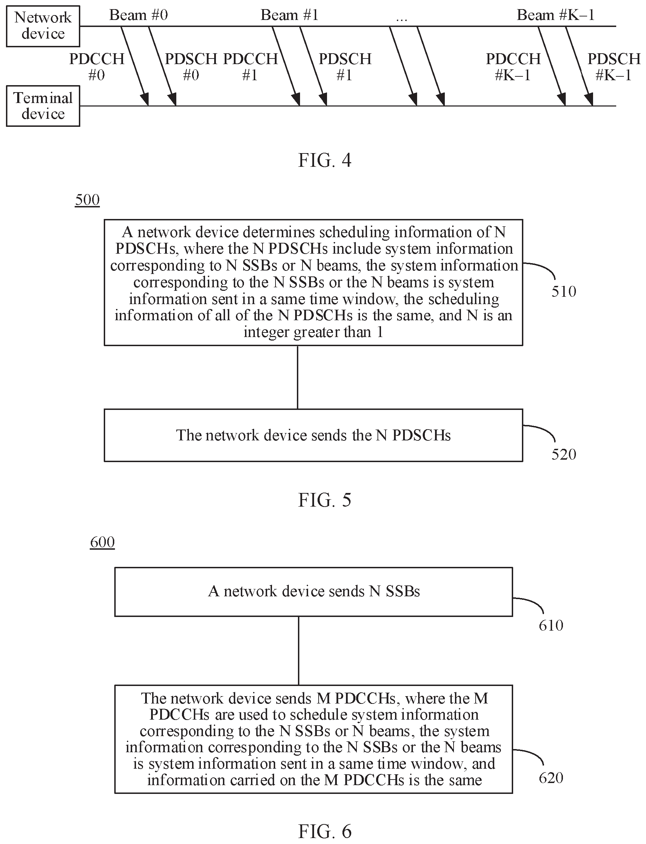

FIG. 4 is a diagram of transmitting information via different beams. As shown in FIG. 4, K beams are used as an example, and K is an integer greater than 1. In an existing manner, a network device sends a PDCCH #0 to a terminal device via a beam #0, where the PDCCH #0 is used to schedule scheduling information of a PDSCH #0; the network device sends a PDCCH #1 to the terminal device via a beam #1, where the PDCCH #1 is used to schedule scheduling information of a PDSCH #1; and the network device sends a PDCCH #K-1 to the terminal device via a beam #K-1, where the PDCCH #K-1 is used to schedule scheduling information of a PDSCH #K-1. In the existing manner, PDCCHs corresponding to beams are independent of each other, and the PDCCHs are different. In this case, detection can be performed only based on the respective beams, causing low transmission efficiency.

In view of this, this application provides a manner, to implement joint detection based on all beams, and improve transmission efficiency.

Before the solutions of this application are described, the following descriptions are provided.

(1) In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

(2) In this application, "sending" and "receiving" indicate signal transmission directions. For example, "sending information to XX" may be understood as that a destination end of the information is the XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

(3) In embodiments of this application, "beam", "SSB", and "SSB beam" may be used interchangeably. For example, one beam corresponds to one SSB, and different beams correspond to different SSBs. Specifically, if one beam is used for transmission of one SSB, it may be considered that the beam is a beam corresponding to the SSB, in other words, the SSB is an SSB corresponding to the beam. It may be understood that in embodiments of this application, an example in which one SSB corresponds to one beam is mainly used for description. This is not limited. For example, one SSB may alternatively correspond to a plurality of beams.

(4) In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

(5) In this application, "first" and "second" are merely for ease of description, and are used to distinguish objects, but are not intended to limit the scope of embodiments of this application, and are not used to describe an order or a sequence of features. It should be understood that objects described in such a way are interchangeable in an appropriate circumstance, so that a solution other than embodiments of this application can be described.

A method provided in embodiments of this application is described in detail below with reference to the accompanying drawings. Embodiments provided in this application may be applied to the communication system shown in FIG. 1. This is not limited.

In the following embodiments, a terminal device and a network device are used as examples for description. The terminal device may alternatively be replaced with a component (for example, a chip, a chip system, or a circuit) of the terminal device. The network device may alternatively be replaced with a component (for example, a chip, a chip system, or a circuit) of the network device.

FIG. 5 is a diagram of a communication method 500 according to an embodiment of this application. The method 500 shown in FIG. 5 may include the following steps.

510: A network device determines scheduling information of N PDSCHs, where the N PDSCHs include system information corresponding to N SSBs or N beams, the system information corresponding to the N SSBs or the N beams is system information sent in a same time window, the scheduling information of all of the N PDSCHs is the same, and N is an integer greater than 1.

The N SSBs are used as an example. That the N PDSCHs include the system information corresponding to the N SSBs indicates that each PDSCH includes system information corresponding to one SSB. For example, N=3. For differentiation, three PDSCHs are respectively referred to as a PDSCH #1, a PDSCH #2, and a PDSCH #3. The PDSCH #1 includes system information corresponding to an SSB #1, the PDSCH #2 includes system information corresponding to an SSB #2, and the PDSCH #3 includes system information corresponding to an SSB #3. Indexes of the SSB #1, the SSB #2, and the SSB #3 are different.

The system information may include various SIBs, for example, a SIB 1.

For example, a length of the time window is any one of the following: 5 ms, 10 ms, 20 ms, 40 ms, 80 ms, 160 ms, 320 ms, or 640 ms. A specific length of the time window is not limited.

Optionally, scheduling information (or referred to as configuration information) of a PDSCH includes at least one of the following information: a modulation and coding scheme (modulation and coding scheme, MCS), time domain resource allocation (time domain resource allocation, TDRA), frequency domain resource allocation (frequency domain resource allocation, FDRA), a redundancy version (redundancy version, RV), a new data indicator (new data indicator, NDI), a resource mapping mode, or a DMRS symbol position.

In an example, the scheduling information of the PDSCH includes an MCS. Based on this, MCSs of all of the N PDSCHs are the same.

In another example, the scheduling information of the PDSCH includes a TDRA. Based on this, TDRAs of all of the N PDSCHs are the same. For example, the TDRA includes at least one of the following: a start position, an end position, a time length, or an offset position. The offset position may indicate an offset position of the PDSCH relative to another signal (for example, a PDCCH or an SSB). It may be understood that each item included in the TDRA may be considered as a relative time domain position.

For example, it is assumed that the TDRA includes a start position and a time length, and N=2. For differentiation, two PDSCHs are respectively referred to as a PDSCH #1 and a PDSCH #2. TDRAs of the PDSCH #1 and the PDSCH #2 are the same. It indicates that a start position of the PDSCH #1 in one time domain unit (for example, one slot) and a time length of the PDSCH #1 are the same as a start position of the PDSCH #2 in one time domain unit (for example, one slot) and a time length of the PDSCH #2. Alternatively, it indicates that an offset position of the PDSCH #1 relative to a signal (for example, a PDCCH corresponding to the PDSCH #1) and a time length of the PDSCH #1 are the same as an offset position of the PDSCH #2 relative to another signal (for example, a PDCCH corresponding to the PDSCH #2) and a time length of the PDSCH #2. For example, a start position of the PDSCH #1 in a slot #1 is a $5^{th}$ symbol, and a time length is three symbols; and a start position of the PDSCH #2 in a slot #2 is a $5^{th}$ symbol, and a time length is three symbols.

When the TDRA includes at least two of a start position, an end position, a time length, or an offset position, TDRAs of all of the PDSCHs are the same. It may also be understood as that at least one of information in the TDRAs of all of the PDSCHs is the same. The foregoing example is used as an example. That the TDRAs of the PDSCH #1 and the PDSCH #2 are the same may alternatively mean that start positions in the TDRAs of the PDSCH #1 and the PDSCH #2 may be the same, for example, both the start positions are the $5^{th}$ symbol.

In another example, the scheduling information of the PDSCH includes an FDRA. Based on this, FDRAs of all of the N PDSCHs are the same. For example, the FDRA includes at least one of the following: a start position, an end position, or a resource length. It may be understood that each item included in the FDRA may be considered as a relative frequency domain position (for example, an offset position relative to a PDCCH or an offset position relative to an SSB). For details, refer to the foregoing descriptions of the TDRA. The details are not described herein again.

The foregoing briefly enumerates three examples. It may be understood that the scheduling information of the PDSCH may include at least one of the foregoing examples.

520: The network device sends the N PDSCHs.

Correspondingly, a terminal device receives the N PDSCHs. It may be understood that, that the terminal device receives the N PDSCHs does not mean that the terminal device definitely has received the N PDSCHs. That the terminal device receives the N PDSCHs means that the terminal device may perform joint reception (or referred to as joint detection or joint monitoring) on the N PDSCHs. For example, the terminal device may receive at least one of the N PDSCHs. For example, that the terminal device jointly receives the N PDSCHs includes: The terminal device receives the N PDSCHs based on maximum ratio combining.

For example, the N PDSCHs sent by the network device may be consecutive (for example, corresponding SSB indexes are consecutive). Alternatively, the N PDSCHs sent by the network device may be inconsecutive (for example, corresponding SSB indexes are inconsecutive). Alternatively, the N PDSCHs may be consecutive (for example, corresponding SSB indexes are consecutive), and the network device may send only a part of the N PDSCHs.

According to the foregoing technical solution, the scheduling information of all of the N PDSCHs is the same. Therefore, the terminal device may jointly receive the N PDSCHs. Joint reception of the N PDSCHs enhances transmission performance and improves user experience.

Optionally, there are two solutions for scheduling information of a PDSCH:

Solution A: The scheduling information of the PDSCH is scheduled by using a PDCCH, that is, the PDCCH indicates the scheduling information of the PDSCH. According to this solution, the N PDSCHs may be indicated by M PDCCHs, and the scheduling information of the N PDSCHs is the same. In this case, it indicates that information carried on the M PDCCHs is the same, where M is an integer greater than or equal to 1.

Solution B: The scheduling information of the PDSCH is scheduled by using information other than a PDCCH, that is, the information other than the PDCCH indicates the scheduling information of the PDSCH. According to this solution, the network device may not need to send the PDCCH corresponding to the PDSCH.

The two solutions are respectively described below with reference to a method 600 and a method 1000.

First, Solution A is described with reference to FIG. 6.

FIG. 6 is a diagram of a communication method 600 according to another embodiment of this application. The method 600 shown in FIG. 6 may include the following steps.

610: A network device sends N SSBs.

N is an integer greater than 1.

For example, the N SSBs may correspond to N beams, that is, one SSB corresponds to one beam. In other words, one SSB may be transmitted via one beam. It may be understood that indexes of the N SSBs may be different.

It may be understood that the N SSBs sent by the network device may be consecutive (for example, corresponding SSB indexes are consecutive). Alternatively, the N SSBs sent by the network device may be inconsecutive (for example, corresponding SSB indexes are inconsecutive). Alternatively, the N SSBs may be consecutive (for example, corresponding SSB indexes are consecutive), and the network device may send only a part of the N SSBs.

620: The network device sends M PDCCHs, where the M PDCCHs are used to schedule system information corresponding to the N SSBs or the N beams, the system information corresponding to the N SSBs or the N beams is system information sent in a same time window, and information carried on the M PDCCHs is the same.

Correspondingly, a terminal device receives the M PDCCHs. It may be understood that, that the terminal device receives the M PDCCHs does not mean that the terminal device definitely has received the M PDCCHs. That the terminal device receives the M PDCCHs means that the terminal device may perform joint reception (or referred to as joint detection or joint monitoring) on the M PDCCHs. For example, the terminal device may receive at least one of the M PDCCHs. For example, that the terminal device jointly receives the M PDCCHs includes: The terminal device receives the M PDCCHs based on maximum ratio combining.

M is an integer greater than or equal to 1. For example, M is less than or equal to N.

For the system information and the time window, refer to the related descriptions in the method 500. Details are not described herein again.

A candidate time domain position (a system frame, a subframe, a slot, or an OFDM symbol) of the PDCCH may be determined based on a preset relationship (for example a relationship between the PDCCH and an SSB) and/or indication information in master system information. For details, refer to the method corresponding to FIG. 3. The details are not described again.

The system information may be carried on PDSCHs, that is, the system information corresponding to the N SSBs or the N beams is carried on N PDSCHs. Based on this, that the M PDCCHs are used to schedule the system information corresponding to the N SSBs or the N beams may also be understood as that the M PDCCHs include scheduling information (or referred to as configuration information) of the N PDSCHs, and the N PDSCHs include the system information corresponding to the N SSBs or the N beams. That the information carried on the M PDCCHs is the same may be understood as that the scheduling information of the N PDSCHs is the same.

It may be understood that a PDCCH is used to indicate scheduling information of a PDSCH, or a PDCCH is scrambled by using a system information radio network temporary identifier (system information radio network temporary identifier, SI-RNTI).

Optionally, information carried on each of the M PDCCHs includes at least one of the following information: an MCS, a TDRA, an FDRA, an RV, an NDI, a resource mapping mode, or a DMRS symbol position. The at least one of the foregoing information is information corresponding to the system information, that is, information about a PDSCH on which the system information is carried. It may be understood that positions indicated in the TDRA and the FDRA are relative positions. For details, refer to the related descriptions in the foregoing method 500. The details are not described herein again.

The following describes two solutions with reference to a value of M.

Solution 1: M=1.

M=1, that is, the system information corresponding to the N SSBs (or the N beams or N SSB beams) corresponds to one PDCCH. Specifically, the system information is carried on PDSCHs, the PDSCHs are scheduled by using a PDCCH, the N SSBs correspond to N pieces of system information, the N pieces of system information may be carried on the N PDSCHs, and the N PDSCHs may be scheduled by using one PDCCH.

According to Solution 1, PDCCH content of system information corresponding to a plurality of SSBs is centralized, to enhance transmission performance. Specifically, the PDCCH content of the system information corresponding to the plurality of SSBs is scheduled by using one PDCCH, and a code length is increased. An increase in the code length can increase a coding gain. In addition, scheduling the PDCCH content of the system information corresponding to the plurality of SSBs by using one PDCCH reduces cyclic redundancy check (cyclic redundancy check, CRC) overheads.

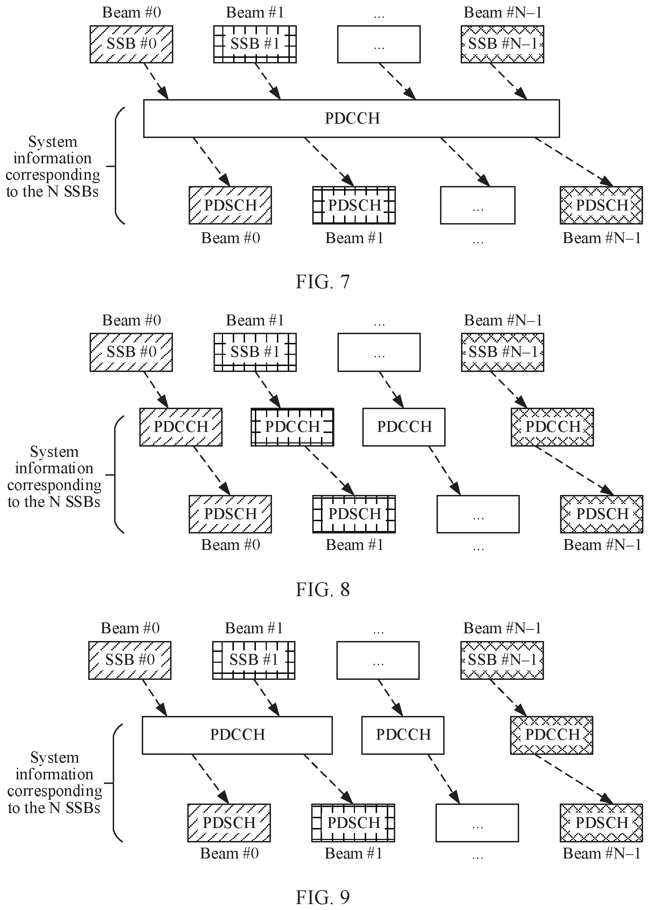

FIG. 7 is a diagram of SSB and system information transmission applicable to Solution 1. For differentiation, the N beams are respectively referred to as a beam #0, a beam #1, ..., and a beam #N-1, and the N SSBs are respectively referred to as an SSB #0, an SSB #1, ..., and an SSB #N-1. As shown in FIG. 7, the system information corresponding to the N SSBs is carried on the N PDSCHs, and the N PDSCHs are scheduled by using one PDCCH.

Solution 2: M>1.

M>1, that is, the system information corresponding to the N SSBs (or the N beams or N SSB beams) corresponds to at least two PDCCHs, and information carried on the at least two PDCCHs is the same. Specifically, the system information is carried on PDSCHs, the PDSCHs are scheduled by using a PDCCH, the N SSBs correspond to N pieces of system information, the N pieces of system information may be carried on the N PDSCHs, the N PDSCHs may be scheduled by using the M PDCCHs, and the information carried on all of the M PDCCHs is the same.

According to Solution 2, the information carried on the M PDCCHs is the same, and therefore, a receiving side (namely, the terminal device) may jointly receive PDCCHs corresponding to system information of a plurality of different SSBs (or beams), to enhance receiving performance.

FIG. 8 is a diagram of SSB and system information transmission applicable to Solution 2. For differentiation, the N beams are respectively referred to as a beam #0, a beam #1, ..., and a beam #N-1, and the N SSBs are respectively referred to as an SSB #0, an SSB #1, ..., and an SSB #N-1. As shown in FIG. 8, the system information corresponding to the N SSBs is carried on the N PDSCHs, and the N PDSCHs are scheduled by using the M PDCCHs. In an example shown in FIG. 8, M=N.

FIG. 9 is another diagram of SSB and system information transmission applicable to Solution 2. For differentiation, the N beams are respectively referred to as a beam #0, a beam #1, ..., and a beam #N-1, and the N SSBs are respectively referred to as an SSB #0, an SSB #1, ..., and an SSB #N-1. As shown in FIG. 9, the system information corresponding to the N SSBs is carried on the N PDSCHs, and the N PDSCHs are scheduled by using the M PDCCHs. In an example shown in FIG. 9, M is less than N. In other words, in the system information corresponding to the N beams, system information corresponding to at least two SSBs corresponds to one PDCCH. In the example shown in FIG. 9, for example, system information corresponding to the SSB #0 and the SSB #1 correspond to one PDCCH.

Optionally, the method 600 further includes: The network device sends indication information #1 (namely, an example of first indication information) to the terminal device, where the indication information #1 indicates a value of N. In this manner, the terminal device may determine the value of N based on an indication of the network device, so that the terminal device learns of a quantity of SSBs to be jointly received.

In a first possible implementation, the indication information #1 is an SSB. According to this implementation, the value of N may be indicated by the SSB.

For example, the indication information #1 is a PBCH in the SSB. For example, the value of N may be carried in CORESET configuration information on the PBCH.

For another example, the indication information #1 is a MIB in the SSB.

In a second possible implementation, the indication information #1 is a DMRS. According to this implementation, the value of N may be indicated by the DMRS, so that the terminal device can perform combined detection on the N SSBs. In addition, because the DMRS detection has high reliability and low complexity, detection performance of the terminal device can be enhanced.

For example, the indication information #1 is a DMRS corresponding to an SSB. For ease of description, a DMRS used to demodulate an SSB (or a DMRS in an SSB) may be referred to as a DMRS corresponding to the SSB.

For another example, the indication information #1 is a DMRS corresponding to a PDCCH. For ease of description, a DMRS used to demodulate a PDCCH (or a DMRS in a PDCCH) may be referred to as a DMRS corresponding to the PDCCH.

For another example, the indication information #1 is a DMRS corresponding to a PDSCH. For ease of description, a DMRS used to demodulate a PDSCH (or a DMRS in a PDSCH) may be referred to as a DMRS corresponding to the PDSCH.

The following describes an implementation in which the indication information #1 is a DMRS (for example, a DMRS corresponding to an SSB, a DMRS corresponding to a PDCCH, or a DMRS corresponding to a PDSCH).

For example, the value of N varies depending on different DMRS sequences, that is, the value of N may be indicated by a DMRS sequence. Specifically, there is a correspondence between the DMRS sequence and the value of N (for differentiation, the correspondence is referred to as a correspondence #1), and the terminal device may learn of the value of N based on the DMRS sequence and the correspondence #1.

In an example, the correspondence #1 may exist, for example, may be stored or transmitted, in a form of a table, a function, a text, or a character string. Table 1 is an example of presenting the correspondence #1 in a form of a table.

Table 1

| DMRS sequence | N |
|---|---|
| DMRS sequence #1 | N1 |
| DMRS sequence #2 | N2 |
| DMRS sequence #3 | N3 |

Table 1 is used as an example. The indication information #1 is the DMRS sequence. If the DMRS sequence is the DMRS sequence #1, the value of N indicated by the indication information #1 is N1. If the DMRS sequence is the DMRS sequence #2, the value of N indicated by the indication information #1 is N2. If the DMRS sequence is the DMRS sequence #3, the value of N indicated by the indication information #1 is N3.

It may be understood that Table 1 is an example for description, and is not limited. Any variation of Table 1 is applicable to embodiments of this application. For example, the DMRS sequence in Table 1 may alternatively be replaced with an index of the DMRS sequence, that is, a correspondence between an index (or an identifier) of the DMRS sequence and the value of N may be identified. For another example, Table 1 may include more or fewer values of N and DMRS sequences.

Optionally, the value of N is one of 2, 4, 6, or 8. It may be understood that this is merely an example for description, and is not limited. For example, the value of N may be another value. For example, N is a quantity of actually sent SSBs, that is, information carried on PDCCHs of system information corresponding to all SSBs in a cell is the same. In other words, the terminal device may jointly receive the PDCCHs of the system information corresponding to all of the SSBs in the cell.

Indexes of the N SSBs are different. The N SSBs may have the following implementations.

In a first possible implementation, the N SSBs are adjacent in time. In this manner, impact of channel time variability on performance can be reduced, so that the terminal device can jointly receive PDCCHs of system information corresponding to a plurality of SSBs.

That the N SSBs are adjacent in time means that time domain resources occupied by two adjacent SSBs in the N SSBs are adjacent.

For example, it is assumed that N=4. The N SSBs are sequentially an SSB #0, an SSB #1, an SSB #2, and an SSB #3 in a sequence of time domain resources, and the N SSBs are adjacent in time. It may indicate that the SSB #0, the SSB #1, the SSB #2, and the SSB #3 occupy four consecutive time domain units.

In a second possible implementation, the indexes of the N SSBs are adjacent. In this manner, impact of channel time variability on performance can be reduced, so that the terminal device can jointly receive PDCCHs of system information corresponding to a plurality of SSBs.

That the indexes of the N SSBs are adjacent means that indexes of two adjacent SSBs in the N SSBs are adjacent, that is, the N SSBs are adjacent or consecutive N SSBs.

In a third possible implementation, the N SSBs are evenly spaced in time. This manner helps shorten average access time.

That the N SSBs are evenly spaced in time means that time domain resources occupied by two adjacent SSBs in the N SSBs are at a same interval.

For example, it is assumed that N=4. The N SSBs are sequentially an SSB #0, an SSB #1, an SSB #2, and an SSB #3 in a sequence of time domain resources, and the N SSBs are evenly spaced in time. It may indicate that a time interval between the SSB #0 and the SSB #1, a time interval between the SSB #1 and the SSB #2, and a time interval between the SSB #2 and the SSB #3 are the same.

In a fourth possible implementation, the indexes of the N SSBs are evenly spaced. This manner helps shorten average access time.

That the indexes of the N SSBs are evenly spaced means that an interval (or a difference) between indexes of two adjacent SSBs in the N SSBs is the same.

For example, it is assumed that N=4. The N SSBs are sequentially an SSB #0, an SSB #1, an SSB #2, and an SSB #3 in ascending order of indexes, and the indexes of the N SSBs are evenly spaced. It may indicate that an interval between an index of the SSB #0 and an index of the SSB #1, an interval between an index of the SSB #1 and an index of the SSB #2, and an interval between an index of the SSB #2 and an index of the SSB #3 are the same.

As described above, the terminal device may jointly receive the M PDCCHs. The following describes several possible implementations in which the terminal device determines to jointly receive the M PDCCHs.

In a first possible implementation, the network device sends indication information #2 (namely, an example of second indication information) to the terminal device, where the indication information #2 indicates whether the information carried on the M PDCCHs is the same, or the indication information #2 indicates whether the M PDCCHs are jointly received.

If the indication information #2 indicates whether the information carried on the M PDCCHs is the same, after the terminal device receives the indication information #2, if the indication information #2 indicates that the information carried on the M PDCCHs is the same, the terminal device jointly receives the M PDCCHs; or if the indication information #2 indicates that the information carried on the M PDCCHs is different, the terminal device does not jointly receive the M PDCCHs.

"Whether the M PDCCHs are jointly received" may alternatively be replaced with any one of the following: "whether joint reception of the M PDCCHs is supported", "whether multi-beam joint detection is supported", "whether multi-beam joint reception is supported", "whether joint reception of PDSCHs is supported", "whether multi-beam joint sending is supported", "whether combined detection is supported", or the like.

It may be understood that specific content indicated by the indication information #2 is not limited in this embodiment of this application, provided that a solution in which the terminal device determines, based on the indication information #2, whether to jointly receive the M PDCCHs is applicable to embodiments of this application. Descriptions are provided below mainly by using an example in which the indication information #2 indicates whether the M PDCCHs are jointly received.

In an example, the indication information #2 is an SSB. According to this implementation, whether the M PDCCHs are jointly received may be indicated by the SSB.

For example, the indication information #2 is a PBCH in the SSB.

For another example, the indication information #2 is a MIB in the SSB.

In another example, the indication information #2 is a DMRS. According to this implementation, whether the M PDCCHs are jointly received may be indicated by the DMRS, so that the terminal device can determine whether to jointly receive the N SSBs. In addition, because the DMRS detection has high reliability and low complexity, detection performance of the terminal device can be enhanced.

For example, the indication information #2 is a DMRS corresponding to a PDCCH.

For another example, the indication information #2 is a DMRS corresponding to an SSB.

The following describes an implementation in which the indication information #2 is a DMRS (for example, a DMRS corresponding to an SSB or a DMRS corresponding to a PDSCH).

For example, there is a correspondence between a DMRS sequence and whether the M PDCCHs are jointly received (for differentiation, the correspondence is referred to as a correspondence #2), and the terminal device may learn, based on the DMRS sequence and the correspondence #2, whether the M PDCCHs are jointly received.

In an example, the correspondence #2 may exist, for example, may be stored or transmitted, in a form of a table, a function, a text, or a character string. Table 2 is an example of presenting the correspondence #2 in a form of a table.

Table 2

| DMRS sequence | Whether the M PDCCHs are jointly received |
| --- | --- |
| DMRS sequence #1 | The M PDCCHs are not jointly received |
| DMRS sequence #2 or DMRS sequence #3 | The M PDCCHs are jointly received |

Table 2 is used as an example. The indication information #2 is the DMRS sequence. If the DMRS sequence is the DMRS sequence #1, it indicates that the indication information #2 indicates that the M PDCCHs are not jointly received. If the DMRS sequence is the DMRS sequence #2 or the DMRS sequence #3, it indicates that the indication information #2 indicates that the M PDCCHs are jointly received.

It may be understood that Table 2 is an example for description, and is not limited. Any variation of Table 2 is applicable to embodiments of this application. For example, the DMRS sequence in Table 2 may alternatively be replaced with an index of the DMRS sequence. For another example, Table 2 may include more or fewer DMRS sequences.

In another example, the indication information #2 is implemented by using at least one bit. For example, it is assumed that one bit is used to indicate whether the M PDCCHs are jointly received. If the bit is set to "1", it indicates that the M PDCCHs are jointly received. If the bit is set to "0", it indicates that the M PDCCHs are not jointly received. It should be understood that the foregoing descriptions are merely example descriptions, and constitute no limitation.

In a second possible implementation, the terminal device determines whether to jointly receive the M PDCCHs.

For example, the terminal device may attempt to jointly receive the M PDCCHs, to identify whether to jointly receive the M PDCCHs.

For example, the terminal device jointly receives the M PDCCHs. If the joint reception succeeds within preset duration, the terminal device determines that the terminal device can jointly receive the M PDCCHs. If the joint reception fails within preset duration, the terminal device determines that the terminal device cannot jointly receive the M PDCCHs, and therefore may stop the joint reception. The preset duration may be preconfigured, predefined in a protocol, or pre-agreed on by the network device and the terminal device. This is not limited.

For another example, the terminal device jointly receives the M PDCCHs. If the reception still fails when a quantity of times of the joint reception exceeds a preset quantity of times, the terminal device determines that the terminal device cannot jointly receive the M PDCCHs, and therefore may stop the joint reception. The preset quantity of times may be preconfigured, predefined in a protocol, or pre-agreed on by the network device and the terminal device. This is not limited.

For another example, the terminal device may determine, based on quality of a received PDCCH signal, whether to jointly receive a plurality of PDCCHs. For example, when quality of a received a PDCCH signal is lower than a preset threshold, the terminal device attempts to perform combined detection (for example, joint equalization, and then demodulation and decoding) on a plurality of PDCCHs. The preset threshold may be preconfigured, predefined in a protocol, or pre-agreed on by the network device and the terminal device. This is not limited.

Optionally, the M PDCCHs are the same in at least one of the following corresponding information: a frequency domain resource position, a mapped resource position, a quantity of mapped resources (or an aggregation level, or a quantity of REGs (resource element group Resource Element Group)), and a time domain resource position (a position in a slot).

The following describes a related solution of redundancy versions of the N PDSCHs.

In a first possible implementation, the N SSBs correspond to the N PDSCHs, and a redundancy version index of each PDSCH is related to N and/or an SSB index that corresponds to the PDSCH.

In an example, a redundancy version index of each PDSCH is related to an SSB index corresponding to the PDSCH. In this way, because indexes of different SSBs are different, redundancy version indexes of all of the PDSCHs are different. The redundancy version indexes of all of the PDSCH are different, so that benefits of joint reception can be increased.

Assuming that a redundancy version index of a PDSCH is denoted as an RV, the RV satisfies: $RV=f(SSB\ index)$, where $f$ represents a function.

For example, a redundancy version RV of a PDSCH corresponding to an $n^{th}$ SSB is n mod x. mod represents a modulo function, n represents an SSB index, and x is a constant. For example, a value of x is an even number. For example, the value of x is any one of the following: 2, 4, 6, 8, or 10.

In another example, a redundancy version index of each PDSCH is related to N.

Assuming that a redundancy version index of a PDSCH is denoted as an RV, the RV satisfies: RV=$f$(N), where $f$ represents a function. In this case, because a value of N is fixed, redundancy versions of all of the PDSCHs are the same.

In another example, a redundancy version index of each PDSCH is related to N and an SSB index that corresponds to the PDSCH.

Assuming that a redundancy version index of a PDSCH is denoted as an RV, the RV satisfies: RV=$f$(SSB index, n), where $f$ represents a function.

For example, a redundancy version RV of a PDSCH corresponding to an $n^{th}$ SSB is n mod N. n represents an SSB index.

In a second possible implementation, the N SSBs correspond to the N PDSCHs, and redundancy versions of all of the PDSCHs are the same. In this case, redundancy versions of all of the PDSCHs are the same, and scheduling information of all of the PDSCHs is completely the same. In this way, more simple and efficient joint reception can be implemented. For example, PDSCH joint reception between a plurality of SSBs can be implemented in a maximum ratio combining manner, so that a transmit diversity gain is increased and performance is enhanced.

The foregoing describes a related solution of Solution A, and the following describes Solution B.

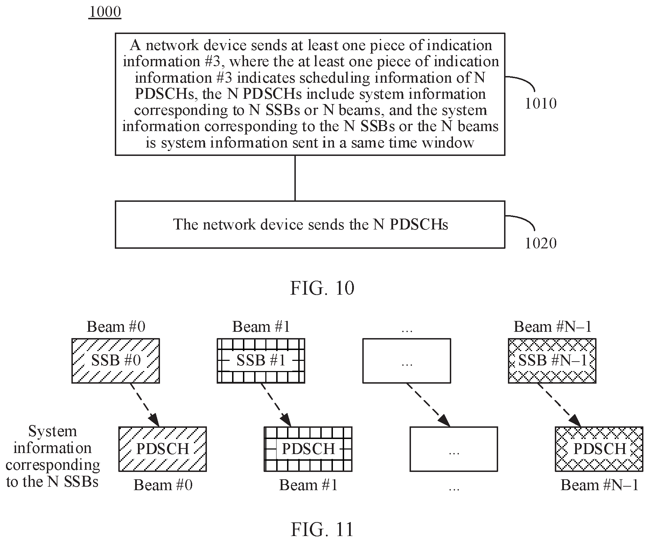

FIG. 10 is a diagram of a communication method 1000 according to another embodiment of this application. The method 1000 shown in FIG. 10 may include the following steps.

1010: A network device sends at least one piece of indication information #3, where the at least one piece of indication information #3 indicates scheduling information of N PDSCHs, the N PDSCHs include system information corresponding to N SSBs or N beams, and the system information corresponding to the N SSBs or the N beams is system information sent in a same time window.

N is an integer greater than 1.

The indication information #3 is information other than a PDCCH.

For scheduling information of a PDSCH, refer to the descriptions in the method 500. Details are not described herein again.

Optionally, scheduling information of the N PDSCHs is the same. Based on this, the terminal device may jointly receive the N PDSCHs, to enhance receiving performance. For this solution, refer to the related descriptions in the method 500.

1020: The network device sends the N PDSCHs.

Correspondingly, a terminal device receives the N PDSCHs. It may be understood that, that the terminal device receives the N PDSCHs does not mean that the terminal device definitely has received the N PDSCHs. That the terminal device receives the N PDSCHs means that the terminal device may perform joint reception (or referred to as joint detection or joint monitoring) on the N PDSCHs. For example, the terminal device may receive at least one of the N PDSCHs. For example, that the terminal device jointly receives the N PDSCHs includes: The terminal device receives the N PDSCHs based on maximum ratio combining.

According to this solution, the system information may be transmitted without using a PDCCH. In other words, the scheduling information of the PDSCH may be scheduled by using other information than the PDCCH, and does not need to be scheduled by using the PDCCH. Therefore, the network device does not need to send the PDCCH. In this way, a resource originally used to transmit the PDCCH is used to transmit the PDSCH, so that a coverage rate is increased.

FIG. 11 is a diagram of SSB and system information transmission without PDCCH transmission applicable to an embodiment of this application. For differentiation, the N beams are respectively referred to as a beam #0, a beam #1, ..., and a beam #N-1, and the N SSBs are respectively referred to as an SSB #0, an SSB #1, ..., and an SSB #N-1. As shown in FIG. 11, the system information corresponding to the N beams is carried on the N PDSCHs. In this process, no PDCCH is sent.

The following describes a related solution of the indication information #3.

Solution 1: That the network device sends the at least one piece of indication information #3 in step 1010 includes: The network device sends one piece of indication information #3. The indication information #3 indicates the scheduling information of the N PDSCHs.

Solution 2: That the network device sends the at least one piece of indication information #3 in step 1010 includes: The network device sends N pieces of indication information #3. The N pieces of indication information #3 indicate the scheduling information of the N PDSCHs, that is, one piece of indication information #3 indicates scheduling information of one PDSCH.

Optionally, the indication information #3 is an SSB and/or a DMRS. For ease of description, several implementations are described below mainly using Solution 2 as an example.

In a first possible implementation, the indication information #3 is an SSB. According to this implementation, scheduling information of a PDSCH may be indicated by an SSB.

For example, the indication information #3 is a PBCH in the SSB.

For another example, the indication information #3 is a MIB in the SSB.

In a second possible implementation, the indication information #3 is a DMRS. According to this implementation, because the DMRS detection has high reliability and low complexity, detection performance of the terminal device can be enhanced.

For example, the indication information #3 is a DMRS corresponding to a PDSCH.

In a third possible implementation, the indication information #3 is an SSB and a DMRS. According to this implementation, scheduling information of a PDSCH may be jointly indicated by an SSB and a DMRS. In other words, a part of the scheduling information of the PDSCH is indicated by the SSB, and a part of the scheduling information is indicated by the DMRS.

For example, the indication information #3 is a PBCH and a DMRS corresponding to the PDSCH, that is, the scheduling information of the PDSCH is divided into two parts. One part of the scheduling information is carried on the PBCH, and the other part of the scheduling information is carried in the DMRS corresponding to the PDSCH.

Optionally, the scheduling information of the PDSCH includes an MCS, and the MCS of the PDSCH is indicated by using at least one bit. For example, it is assumed that there are four candidate MCSs, and the MCS of the PDSCH is indicated by using two bits. For example, the four candidate MCSs are 0, 1, 2, and 3.

For example, it is assumed that there are four candidate MCSs, respectively denoted as an MCS #0, an MCS #1, an MCS #2, and an MCS #3 for differentiation, and the MCS of the PDSCH is indicated by using two bits. For example, if the two bits are set to "00", it indicates that the MCS of the PDSCH is the MCS #0; if the two bits are set to "01", it indicates that the MCS of the PDSCH is the MCS #1; if the two bits are set to "10", it indicates that the MCS of the PDSCH is the MCS #2; or if the two bits are set to "11", it indicates that the MCS of the PDSCH is the MCS #3.

Optionally, the scheduling information of the PDSCH includes frequency domain resource allocation, and the frequency domain resource allocation of the PDSCH is associated with a position of the SSB.

In a first possible implementation, a start position of a frequency domain resource of the PDSCH is the same as a start position of a frequency domain resource of the SSB. Based on this, the terminal device may learn of the start position of the frequency domain resource of the PDSCH based on the start position of the frequency domain resource of the SSB.

In a second possible implementation, an end position of a frequency domain resource of the PDSCH is associated with a start position of a frequency domain resource of the SSB and scheduling bandwidth information indicated in the SSB (for example, a MIB or a PBCH). Based on this, the terminal device may learn of the start position of the frequency domain resource of the PDSCH based on the start position of the frequency domain resource of the SSB and the scheduling bandwidth information indicated in the SSB.

As described above, in the method 1100, the network device does not need to send a PDCCH corresponding to the PDSCH. The terminal device may learn, in any one of the following manners, whether the network device sends a PDCCH.

In a possible implementation, the network device sends indication information #4 to the terminal device, where the indication information #4 indicates whether a PDCCH is sent.

In an example, the indication information #4 is an SSB. According to this implementation, whether the PDCCH is sent may be indicated by the SSB.

For example, the indication information #4 is a PBCH in the SSB.

For another example, the indication information #4 is a MIB in the SSB.

In another example, the indication information #4 is a DMRS. According to this implementation, because the DMRS detection has high reliability and low complexity, detection performance of the terminal device can be enhanced.

For example, the indication information #4 is a DMRS corresponding to an SSB.

For another example, the indication information #4 is a DMRS corresponding to a PDSCH.

The following describes an implementation in which the indication information #4 is a DMRS (for example, a DMRS corresponding to an SSB or a DMRS corresponding to a PDSCH).

For example, there is a correspondence between a DMRS sequence and whether a PDCCH is sent (for differentiation, the correspondence is referred to as a correspondence #3), and the terminal device may learn, based on the DMRS sequence and the correspondence #3, whether a PDCCH is sent.

In an example, the correspondence #3 may exist, for example, may be stored or transmitted, in a form of a table, a function, a text, or a character string. Table 3 is an example of presenting the correspondence #3 in a form of a table.

Table 3

| DMRS sequence | Whether a PDCCH is sent |
|---|---|
| DMRS sequence #1 | A PDCCH is sent |
| DMRS sequence #2 or DMRS sequence #3 | No PDCCH is sent |

Table 3 is used as an example. The indication information #4 is the DMRS sequence. If the DMRS sequence is the DMRS sequence #1, it indicates that the indication information #4 indicates that a PDCCH is sent. If the DMRS sequence is the DMRS sequence #2 or the DMRS sequence #3, it indicates that the indication information #4 indicates that no PDCCH is sent.

It may be understood that Table 3 is an example for description, and is not limited. Any variation of Table 3 is applicable to embodiments of this application. For example, the DMRS sequence in Table 3 may alternatively be replaced with an index of the DMRS sequence. For another example, Table 3 may include more or fewer DMRS sequences.

In another example, the indication information #4 is implemented by using at least one bit. For example, it is assumed that one bit is used to indicate whether a PDCCH is sent. If the bit is set to "1", it indicates that a PDCCH is sent; or if the bit is set to "0", it indicates that no PDCCH is sent. It should be understood that the foregoing descriptions are merely example descriptions, and constitute no limitation.

It may be understood that the foregoing descriptions are provided by using an example in which the indication information #4 indicates whether a PDCCH is sent. This is not limited. For example, the terminal device may alternatively detect whether there is a PDCCH. For example, if no PDCCH is detected by the terminal device within preset duration, it is considered by default that no PDCCH is sent. For another example, if the terminal device has received the indication information #3, it is considered by default that no PDCCH is sent.

Optionally, the method 1000 further includes: The network device sends indication information #1 to the terminal device, where the indication information #1 indicates a value of N. For this solution, refer to the related descriptions in the method 600. Details are not described herein again.

Indexes of the N SSBs are different. The N SSBs may have the following implementations.

In a first possible implementation, the N SSBs are adjacent in time.

In a second possible implementation, the indexes of the N SSBs are adjacent.

In a third possible implementation, the N SSBs are evenly spaced in time.

In a fourth possible implementation, the indexes of the N SSBs are evenly spaced.

For the foregoing four possible implementations, refer to the related descriptions in the method 600. Details are not described herein again.

Optionally, a redundancy version index of each PDSCH is related to N and/or an SSB index that corresponds to the PDSCH, or redundancy versions of all of the PDSCHs are the same. For this solution, refer to the related descriptions in the method 600. Details are not described herein again.

For ease of understanding, a specific procedure is described below by using an SSB as an example. For content that is not described in detail below, refer to the descriptions in the method 500, the method 600, and the method 1000. Details are not described below.

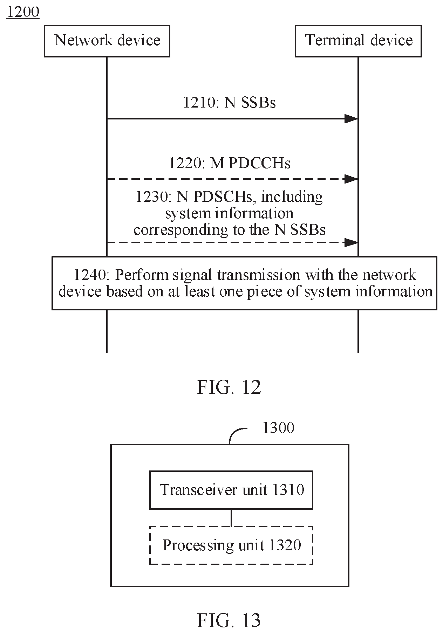

FIG. 12 is a schematic flowchart of a communication method 1200 according to an embodiment of this application. The method 1200 shown in FIG. 12 may include the following steps.

1210: A network device sends N SSBs to a terminal device.

N is an integer greater than 1.

The network device sends, to the terminal device, system information corresponding to the N SSBs.

In a possible implementation, the network device sends, to the terminal device, the system information (for example, a SIB 1) corresponding to the N SSBs. This is implemented by using the solution of the method 600. In this case, the method 1200 further includes step 1220 and step 1230.

In another possible implementation, the network device sends, to the terminal device, the system information (for example, a SIB 1) corresponding to the N SSBs. This is implemented by using the solution of the method 1000. In this case, the method 1200 includes step 1230, that is, the method 1200 does not include step 1220.

1220: The network device sends M PDCCHs to the terminal device.

The M PDCCHs are used to schedule the system information corresponding to the N SSBs, and information carried on the M PDCCHs is the same. Specifically, the system information is carried on PDSCHs, the PDSCHs are scheduled by using a PDCCH, the N SSBs correspond to N pieces of system information, the N pieces of system information may be carried on the N PDSCHs, and the N PDSCHs may be scheduled by using the M PDCCHs.

1230: The network device sends N PDSCHs to the terminal device, where the N PDSCHs include the system information corresponding to the N SSBs.

Correspondingly, the terminal device jointly receives the N PDSCHs, to obtain at least one piece of system information.

Specifically, if the method 1200 includes step 1220 and step 1230, the terminal device may determine scheduling information of the N PDSCHs based on the M PDCCHs, and then jointly receive the N PDSCHs based on the determined scheduling information of the N PDSCHs.

Specifically, if the method 1200 includes step 1230 but does not include step 1220, the terminal device may determine scheduling information of the N PDSCHs based on indication information #3, and then jointly receive the N PDSCHs based on the determined scheduling information of the N PDSCHs. For example, the indication information #3 is an SSB and/or a DMRS. For details, refer to the related descriptions in the method 1000.

1240: The terminal device performs signal transmission with the network device based on the at least one piece of system information.

Signal transmission is performed between the terminal device and the network device. For example, an initial access process is completed, so that the UE normally accesses a network; cell handover is completed; or a beam management process is completed.

It may be understood that in embodiments of this application, interaction between the terminal device and the network device is mainly used as an example for description. This application is not limited thereto. The terminal device may be replaced with a receiving side device, and the receiving side device may be a terminal device or a network device. The network device may be replaced with a transmitting side device, and the transmitting side device may be a terminal device or a network device.

It may be further understood that, in some of the foregoing embodiments, it is mentioned that the terminal device receives the N PDSCHs. As described above, this does not mean that the terminal device definitely has received the N PDSCHs. It indicates that the terminal device jointly receives the N PDSCHs, in other words, the terminal device may jointly receive the N PDSCHs. In addition, a manner in which the terminal device determines whether to jointly receive the N PDSCHs is not limited.

For example, the terminal device may jointly receive the N PDSCHs by default.

For another example, the terminal device may jointly receive the N PDSCHs based on an indication of the network device. For example, the network device sends indication information #5 to the terminal device, where the indication information #5 indicates whether the terminal device may jointly receive the N PDSCHs.

In an example, the indication information #5 may be the indication information #2 described above. For details, refer to the foregoing descriptions.

In another example, the indication information #5 may be the indication information #4 described above. For example, if the indication information #4 indicates that no PDCCH is sent, the terminal device may jointly receive the N PDSCHs by default. If the indication information #4 indicates that a PDCCH is sent, the terminal device does not jointly receive the N PDSCHs by default. For another example, if the indication information #4 indicates that no PDCCH is sent, the terminal device does not jointly receive the N PDSCHs by default. If the indication information #4 indicates that a PDCCH is sent, the terminal device may jointly receive the N PDSCHs by default.

In another example, the indication information #5 is implemented by using at least one bit. For example, it is assumed that one bit is used to indicate whether the N PDSCHs may be jointly received. If the bit is set to "1", it indicates that the N PDSCHs are jointly received. If the bit is set to "0", it indicates that the N PDSCHs are not jointly received. It should be understood that the foregoing descriptions are merely example descriptions, and constitute no limitation.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that, in the foregoing method embodiments, the methods and operations implemented by the terminal device may alternatively be implemented by a component (for example, a chip or a circuit) of the terminal device. In addition, the methods and the operations implemented by the network device may alternatively be implemented by a component (for example, a chip or a circuit) of the network device. This is not limited.

The methods provided in embodiments of this application are described above in detail with reference to FIG. 5 to FIG. 12. Apparatuses provided in embodiments of this application are described below in detail with reference to FIG. 13 to FIG. 15. It should be understood that descriptions of apparatus embodiments correspond to descriptions of method embodiments. Therefore, for content that is not described in detail, refer to the foregoing method embodiments. For brevity, details are not described herein again.

FIG. 13 is a diagram of a communication apparatus 1300 according to an embodiment of this application. The apparatus 1300 includes a transceiver unit 1310. The transceiver unit 1310 may be configured to implement a corresponding communication function. The transceiver unit 1310 may also be referred to as a communication interface or a communication unit. Optionally, the apparatus 1300 further includes a processing unit 1320. The processing unit 1320 may be configured to perform processing, for example, determine a resource pattern.

Optionally, the apparatus 1300 may further include a storage unit. The storage unit may be configured to store instructions and/or data. The processing unit 1320 may read the instructions and/or the data in the storage unit, so that the apparatus implements the foregoing method embodiment.

In a first possible design, the apparatus 1300 may be the network device in the foregoing embodiment (for example, the network device in FIG. 5, the network device in FIG. 6, the network device in FIG. 10, or the network device in FIG. 12), and the apparatus 1300 may implement steps or procedures performed by the network device in the foregoing method embodiment. The transceiver unit 1310 may be configured to perform a receiving/sending-related operation (for example, an operation of sending and/or receiving data or a message) of the network device in the foregoing method embodiments. The processing unit 1320 may be configured to perform a processing-related operation of the network device in the foregoing method embodiments, or an operation other than sending and receiving (for example, an operation other than sending and/or receiving data or a message).

In a possible implementation, the transceiver unit 1310 is configured to send N synchronization signals, where N is an integer greater than 1; and the transceiver unit 1310 is further configured to send M physical downlink control channels PDCCHs, where the M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1. Optionally, the processing unit 1320 is configured to determine the M PDCCHs.

Optionally, information carried on each of the M PDCCHs includes at least one of the following: a modulation and coding scheme, time domain resource allocation, frequency domain resource allocation, a redundancy version, a new data indicator, a resource mapping mode, or a demodulation reference signal symbol position.

Optionally, the transceiver unit 1310 is further configured to send N PDSCHs, where the N PDSCHs include the system information corresponding to the N synchronization signals or the N beams.

Optionally, the N PDSCHs include a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or a value of N.

Optionally, redundancy versions of all of the N PDSCHs are the same.

Optionally, the transceiver unit 1310 is further configured to send first indication information, where the first indication information indicates the value of N.

Optionally, the first indication information is any one of the following: the synchronization signal, a demodulation reference signal corresponding to the PDCCH, a demodulation reference signal corresponding to the PDSCH, or a demodulation reference signal corresponding to the synchronization signal.

Optionally, the value of N is any one of the following: 2, 4, 6, or 8.

Optionally, the transceiver unit 1310 is further configured to send second indication information, where the second indication information indicates that the information carried on the M PDCCHs is the same, or the second indication information indicates to jointly receive the M PDCCHs.

Optionally, the second indication information is any one of the following: the synchronization signal, a demodulation reference signal corresponding to the PDCCH, a demodulation reference signal corresponding to the PDSCH, or a demodulation reference signal corresponding to the synchronization signal.

Optionally, the N synchronization signals meet any one of the following: Time domain resources occupied by two adjacent synchronization signals in the N synchronization signals are adjacent; there is a same interval between time domain resources occupied by two adjacent synchronization signals in the N synchronization signals; indexes of two adjacent synchronization signals in the N synchronization signals are adjacent; or there is a same interval between indexes of two adjacent synchronization signals in the N synchronization signals.

In a second possible design, the apparatus 1300 may be the terminal device in the foregoing embodiment (for example, the terminal device in FIG. 5, the terminal device in FIG. 6, the terminal device in FIG. 10, or the terminal device in FIG. 12), and the apparatus 1300 may implement steps or procedures performed by the terminal device in the foregoing method embodiment. The transceiver unit 1310 may be configured to perform a receiving/sending-related operation (for example, an operation of sending and/or receiving data or a message) of the terminal device in the foregoing method embodiments. The processing unit 1320 may be configured to perform a processing-related operation of the terminal device in the foregoing method embodiments, or an operation other than sending and receiving (for example, an operation other than sending and/or receiving data or a message).

In a possible implementation, the transceiver unit 1310 is configured to receive N synchronization signals, where N is an integer greater than 1; and the transceiver unit 1310 is further configured to receive M physical downlink control channels PDCCHs, where the M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1. Optionally, the processing unit 1320 is configured to determine the M PDCCHs.

Optionally, information carried on each of the M PDCCHs includes at least one of the following: a modulation and coding scheme, time domain resource allocation, frequency domain resource allocation, a redundancy version, a new data indicator, a resource mapping mode, or a demodulation reference signal symbol position.

Optionally, the transceiver unit 1310 is further configured to receive N PDSCHs, where the N PDSCHs include the system information corresponding to the N synchronization signals or the N beams.

Optionally, the N PDSCHs include a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or a value of N.

Optionally, redundancy versions of all of the N PDSCHs are the same.

Optionally, the transceiver unit 1310 is further configured to receive first indication information, where the first indication information indicates the value of N.

Optionally, the first indication information is any one of the following: the synchronization signal, a demodulation reference signal corresponding to the PDCCH, a demodulation reference signal corresponding to the PDSCH, or a demodulation reference signal corresponding to the synchronization signal.

Optionally, the value of N is any one of the following: 2, 4, 6, or 8.

Optionally, the transceiver unit 1310 is further configured to receive second indication information, where the second indication information indicates that the information carried on the M PDCCHs is the same, or the second indication information indicates to jointly receive the M PDCCHs.

Optionally, the processing unit 1320 is configured to determine to jointly receive the M PDCCHs.

Optionally, the second indication information is any one of the following: the synchronization signal, a demodulation reference signal corresponding to the PDCCH, a demodulation reference signal corresponding to the PDSCH, or a demodulation reference signal corresponding to the synchronization signal.

Optionally, the N synchronization signals meet any one of the following: Time domain resources occupied by two adjacent synchronization signals in the N synchronization signals are adjacent; there is a same interval between time domain resources occupied by two adjacent synchronization signals in the N synchronization signals; indexes of two adjacent synchronization signals in the N synchronization signals are adjacent; or there is a same interval between indexes of two adjacent synchronization signals in the N synchronization signals.

It should be understood that a specific process in which the units perform the foregoing corresponding steps is described in detail in the foregoing method embodiments, and for brevity, details are not described herein.

It should be understood that the apparatus 1300 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically the communication apparatus in the foregoing embodiments, and may be configured to perform procedures and/or steps corresponding to the communication apparatus in the foregoing method embodiments. To avoid repetition, details are not described herein again.

The apparatus 1300 in the foregoing solutions has a function of implementing corresponding steps performed by the communication apparatus in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1310 may alternatively be a transceiver circuit (for example, may include a receiving circuit and a sending circuit), and the processing unit may be a processing circuit.

It should be noted that the apparatus in FIG. 13 may be the communication device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

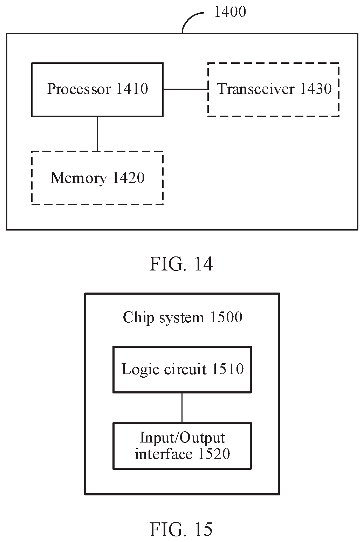

FIG. 14 is a diagram of another communication apparatus 1400 according to an embodiment of this application. The apparatus 1400 includes a processor 1410. The processor 1410 is coupled to a memory 1420. The memory 1420 is configured to store a computer program or instructions and/or data. The processor 1410 is configured to execute the computer program or the instructions stored in the memory 1420, or read the data stored in the memory 1420, to perform the methods in the foregoing method embodiments.

Optionally, there are one or more processors 1410.

Optionally, there are one or more memories 1420.

Optionally, the memory 1420 and the processor 1410 are integrated together or disposed separately.

Optionally, as shown in FIG. 14, the apparatus 1400 further includes a transceiver 1430. The transceiver 1430 is configured to receive a signal and/or send a signal. For example, the processor 1410 is configured to control the transceiver 1430 to receive a signal and/or send a signal.

For example, the processor 1410 may have a function of the processing unit 1320 shown in FIG. 13, the memory 1420 may have a function of the storage unit, and the transceiver 1430 may have a function of the transceiver unit 1310 shown in FIG. 13.

In a solution, the apparatus 1400 is configured to implement operations performed by a communication apparatus in the foregoing method embodiments.

For example, the processor 1410 is configured to execute the computer program or the instructions stored in the memory 1420, to implement related operations of the terminal device or the network device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 15 is a diagram of a chip system 1500 according to an embodiment of this application. The chip system 1500 (or may be referred to as a processing system) includes a logic circuit 1510 and an input/output interface (input/output interface) 1520.

The logic circuit 1510 may be a processing circuit in the chip system 1500. The logic circuit 1510 may be coupled and connected to a storage unit, and invoke instructions in the storage unit, so that the chip system 1500 can implement the methods and functions in embodiments of this application. The input/output interface 1520 may be an input/output circuit in the chip system 1500, and outputs information processed by the chip system 1500, or inputs to-be-processed data or signaling information to the chip system 1500 for processing.

In a solution, the chip system 1500 is configured to implement operations performed by the communication apparatus (for example, the terminal device or the network device) in the foregoing method embodiments.

For example, the logic circuit 1510 is configured to implement a processing-related operation performed by the communication apparatus (for example, the terminal device or the network device) in the foregoing method embodiments, and the input/output interface 1520 is configured to implement a sending and/or receiving-related operation performed by the communication apparatus (for example, the terminal device or the network device) in the foregoing method embodiments.

An embodiment of this application further provides a computer-readable storage medium. The computer-readable storage medium stores computer instructions for implementing the method performed by the communication apparatus (for example, the terminal device, or for another example, the network device) in the foregoing method embodiments.

For example, when the computer program is executed by a computer, the computer is caused to implement the method performed by the communication apparatus (for example, the terminal device or the network device) in the foregoing method embodiments.

An embodiment of this application further provides a computer program product, including instructions. When the instructions are executed by a computer, the method performed by the communication apparatus (for example, the terminal device, or for another example, the network device) in the foregoing method embodiments is implemented.

An embodiment of this application further provides a communication system. The communication system includes the terminal device and/or the network device in the foregoing embodiments. For example, the system includes the terminal device and the network device in FIG. 5, FIG. 6, FIG. 10, or FIG. 12.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending, by a network device, N synchronization signals, wherein N is an integer greater than 1; and
   sending, by the network device, M physical downlink control channels PDCCHs, wherein the M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1.

2. The method according to claim 1, wherein information carried on each of the M PDCCHs comprises at least one of the following: a modulation and coding scheme, time domain resource allocation, frequency domain resource allocation, a redundancy version, a new data indicator, a resource mapping mode, or a demodulation reference signal symbol position.

3. The method according to claim 1 or 2, wherein the method further comprises:
   sending, by the network device, N PDSCHs, wherein the N PDSCHs comprise the system information corresponding to the N synchronization signals or the N beams.

4. The method according to claim 3, wherein the N PDSCHs comprise a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or a value of N.

5. The method according to claim 3, wherein redundancy versions of all of the N PDSCHs are the same.

6. The method according to any one of claims 1 to 5, wherein the method further comprises:
   sending, by the network device, first indication information, wherein the first indication information indicates the value of N.

7. The method according to claim 6, wherein the first indication information is any one of the following: the synchronization signal, a demodulation reference signal corresponding to the PDCCH, a demodulation reference signal corresponding to the PDSCH, or a demodulation reference signal corresponding to the synchronization signal.

8. The method according to any one of claims 1 to 7, wherein the value of N is any one of the following: 2, 4, 6, or 8.

9. The method according to any one of claims 1 to 8, wherein the method further comprises:
sending, by the network device, second indication information, wherein the second indication information indicates that the information carried on the M PDCCHs is the same, or the second indication information indicates to jointly receive the M PDCCHs.

10. The method according to claim 9, wherein the second indication information is any one of the following: the synchronization signal, a demodulation reference signal corresponding to the PDCCH, a demodulation reference signal corresponding to the PDSCH, or a demodulation reference signal corresponding to the synchronization signal.

11. The method according to any one of claims 1 to 10, wherein the N synchronization signals meet any one of the following:

time domain resources occupied by two adjacent synchronization signals in the N synchronization signals are adjacent;
there is a same interval between time domain resources occupied by two adjacent synchronization signals in the N synchronization signals;
indexes of two adjacent synchronization signals in the N synchronization signals are adjacent;
or
there is a same interval between indexes of two adjacent synchronization signals in the N synchronization signals.

12. A communication method, comprising:

receiving, by a terminal device, N synchronization signals, wherein N is an integer greater than 1; and
receiving, by the terminal device, M physical downlink control channels PDCCHs, wherein the M PDCCHs are used to schedule system information corresponding to the N synchronization signals or N beams, the system information corresponding to the N synchronization signals or the N beams is system information sent in a same time window, information carried on the M PDCCHs is the same, and M is an integer greater than or equal to 1.

13. The method according to claim 12, wherein information carried on each of the M PDCCHs comprises at least one of the following: a modulation and coding scheme, time domain resource allocation, frequency domain resource allocation, a redundancy version, a new data indicator, a resource mapping mode, or a demodulation reference signal symbol position.

14. The method according to claim 12 or 13, wherein the method further comprises:
receiving, by the terminal device, N PDSCHs, wherein the N PDSCHs comprise the system information corresponding to the N synchronization signals or the N beams.

15. The method according to claim 14, wherein the N PDSCHs comprise a first PDSCH, and an index of a redundancy version of the first PDSCH is associated with at least one of the following:
an index of the first PDSCH, an index of a beam corresponding to the first PDSCH, an index of a synchronization signal corresponding to the first PDSCH, or a value of N.

16. The method according to claim 14, wherein redundancy versions of all of the N PDSCHs are the same.

17. The method according to any one of claims 12 to 16, wherein the method further comprises:
receiving, by the terminal device, first indication information, wherein the first indication information indicates the value of N.

18. The method according to claim 17, wherein the first indication information is any one of the following: the synchronization signal, a demodulation reference signal corresponding to the PDCCH, a demodulation reference signal corresponding to the PDSCH, or a demodulation reference signal corresponding to the synchronization signal.

19. The method according to any one of claims 12 to 18, wherein the value of N is any one of the following: 2, 4, 6, or 8.

20. The method according to any one of claims 12 to 19, wherein

the method further comprises: receiving, by the terminal device, second indication information, wherein the second indication information indicates that the information carried on the M PDCCHs is the same, or the second indication information indicates to jointly receive the M PDCCHs; or
determining, by the terminal device, to jointly receive the M PDCCHs.

21. The method according to claim 20, wherein the second indication information is any one of the following: the synchronization signal, a demodulation reference signal corresponding to the PDCCH, a demodulation reference signal corresponding to the PDSCH, or a demodulation reference signal corresponding to the synchronization signal.

22. The method according to any one of claims 12 to 21, wherein the N synchronization signals meet any one of the following:

time domain resources occupied by two adjacent synchronization signals in the N synchronization signals are adjacent;
there is a same interval between time domain resources occupied by two adjacent synchronization signals in the N synchronization signals;
indexes of two adjacent synchronization signals in the N synchronization signals are adjacent;
or
there is a same interval between indexes of two adjacent synchronization signals in the N synchronization signals.

23. A communication method, comprising:

sending, by a network device, at least one piece of third indication information, wherein the at least one piece of third indication information indicates scheduling information of each of N physical downlink shared channels PDSCHs, the N PDSCHs comprise system information corresponding to N synchronization signals or N beams, the system information corresponding to the N synchronization signals or the N beams is system information sent in a same time window, the third indication information comprises at least one of the following: the synchronization signal, a demodulation reference signal corresponding to the PDSCH, or a demodulation reference signal corresponding to the synchronization signal, and N is an integer greater than 1; and
sending, by the network device, the N PDSCHs.

24. The method according to claim 23, wherein the scheduling information of each of the N PDSCHs comprises at least one of the following: a modulation and coding scheme, time domain resource allocation, frequency domain resource allocation, a redundancy version, a new data indicator, a resource mapping mode, or a demodulation reference signal symbol position.

25. The method according to claim 23 or 24, wherein the N PDSCHs comprise a first PDSCH, and a frequency domain resource position of the first PDSCH is associated with a frequency domain resource position of a synchronization signal corresponding to the first PDSCH.

26. The method according to claim 25, wherein that a frequency domain resource of the first PDSCH is associated with a frequency domain resource of the synchronization signal corresponding to the first PDSCH comprises: a start position of a frequency domain resource of the first PDSCH is the same as a start position of a frequency domain resource of the synchronization signal corresponding to the first PDSCH; or an end position of a frequency domain resource of the first PDSCH is determined based on a start position of a frequency domain resource of the synchronization signal corresponding to the first PDSCH and scheduling bandwidth information indicated by the synchronization signal corresponding to the first PDSCH.

27. The method according to any one of claims 23 to 26, wherein the method further comprises:
sending, by the network device, first indication information, wherein the first indication information indicates a value of N.

28. The method according to claim 27, wherein the first indication information is any one of the following: the synchronization signal, a demodulation reference signal corresponding to the PDSCH, or a demodulation reference signal corresponding to the synchronization signal.

29. The method according to any one of claims 23 to 28, wherein the value of N is any one of the following: 2, 4, 6, or 8.

30. The method according to any one of claims 23 to 29, wherein the method further comprises:
sending, by the network device, fourth indication information, wherein the fourth indication information indicates whether the network device sends physical downlink control information PDCCH used to schedule the N PDSCHs.

31. The method according to claim 30, wherein the fourth indication information is any one of the following: the synchronization signal, a demodulation reference signal corresponding to the PDSCH, or a demodulation reference signal corresponding to the synchronization signal.

32. The method according to any one of claims 23 to 31, wherein the N PDSCHs comprise a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or the value of N.

33. The method according to any one of claims 23 to 32, wherein scheduling information of all of the N PDSCHs is the same.

34. A communication method, comprising:

receiving, by a terminal device, at least one piece of third indication information, wherein the at least one piece of third indication information indicates scheduling information of each of N physical downlink shared channels PDSCHs, the N PDSCHs comprise system information corresponding to N synchronization signals or N beams, the system information corresponding to the N synchronization signals or the N beams is system information sent in a same time window, the third indication information comprises at least one of the following: the synchronization signal, a demodulation reference signal corresponding to the PDSCH, or a demodulation reference signal corresponding to the synchronization signal, and N is an integer greater than 1; and
receiving, by the terminal device, the N PDSCHs based on the at least one piece of third indication information.

35. The method according to claim 34, wherein the scheduling information of each of the N PDSCHs comprises at least one of the following: a modulation and coding scheme, time domain resource allocation, frequency domain resource allocation, a redundancy version, a new data indicator, a resource mapping mode, or a demodulation reference signal symbol position.

36. The method according to claim 34 or 35, wherein the N PDSCHs comprise a first PDSCH, and a frequency domain resource position of the first PDSCH is associated with a frequency domain resource position of a synchronization signal corresponding to the first PDSCH.

37. The method according to claim 36, wherein that a frequency domain resource of the first PDSCH is associated with a frequency domain resource of the synchronization signal corresponding to the first PDSCH comprises: a start position of a frequency domain resource of the first PDSCH is the same as a start position of a frequency domain resource of the synchronization signal corresponding to the first PDSCH; or an end position of a frequency domain resource of the first PDSCH is determined based on a start position of a frequency domain resource of the synchronization signal corresponding to the first PDSCH and scheduling bandwidth information indicated by the synchronization signal corresponding to the first PDSCH.

38. The method according to any one of claims 34 to 37, wherein the method further comprises:
receiving, by the terminal device, first indication information, wherein the first indication information indicates a value of N.

39. The method according to claim 38, wherein the first indication information is any one of the following: the synchronization signal, a demodulation reference signal corresponding to the PDSCH, or a demodulation reference signal corresponding to the synchronization signal.

40. The method according to any one of claims 34 to 39, wherein the value of N is any one of the following: 2, 4, 6, or 8.

41. The method according to any one of claims 34 to 40, wherein the method further comprises:
receiving, by the terminal device, fourth indication information, wherein the fourth indication information indicates whether the network device sends physical downlink control information PDCCH used to schedule the N PDSCHs.

42. The method according to claim 41, wherein the fourth indication information is any one of the following: the synchronization signal, a demodulation reference signal corresponding to the PDSCH, or a demodulation reference signal corresponding to the synchronization signal.

43. The method according to any one of claims 34 to 42, wherein the N PDSCHs comprise a first PDSCH, and an index of a redundancy version of the first PDSCH is associated with at least one of the following: an index of the first PDSCH, an index of a beam corresponding to the first PDSCH, an index of a synchronization signal corresponding to the first PDSCH, or the value of N.

44. The method according to any one of claims 34 to 43, wherein scheduling information of all of the N PDSCHs is the same.

45. A communication method, comprising:

determining, by a network device, scheduling information of N physical downlink shared channels PDSCHs, wherein the N PDSCHs comprise system information corresponding to N synchronization signals or N beams, the system information corresponding to the N synchronization signals or the N beams is system information sent in a same time window, the scheduling information of all of the N PDSCHs is the same, and N is an integer greater than 1; and
sending, by the network device, the N PDSCHs.

46. The method according to claim 45, wherein the method further comprises:
sending, by the network device, M physical downlink control channels PDCCHs, wherein the M PDCCHs are used to schedule the system information corresponding to the N synchronization signals or the N beams, information carried on the M PDCCHs is the same, and M is an integer greater than or equal to 1.

47. The method according to claim 45, wherein the method further comprises:
sending, by the network device, at least one piece of third indication information, wherein the at least one piece of third indication information indicates scheduling information of each of the N PDSCHs.

48. The method according to claim 47, wherein the third indication information comprises at least one of the following: the synchronization signal, a demodulation reference signal corresponding to the PDSCH, or a demodulation reference signal corresponding to the synchronization signal.

49. A communication method, comprising:

determining, by a terminal device, scheduling information of N physical downlink shared channels PDSCHs, wherein the N PDSCHs comprise system information corresponding to N synchronization signals or N beams, the system information corresponding to the N synchronization signals or the N beams is system information sent in a same time window, the scheduling information of all of the N PDSCHs is the same, and N is an integer greater than 1; and
receiving, by the terminal device, the N PDSCHs.

50. The method according to claim 49, wherein the method further comprises:
receiving, by the terminal device, M physical downlink control channels PDCCHs, wherein the M PDCCHs are used to schedule the system information corresponding to the N synchronization signals or the N beams, information carried on the M PDCCHs is the same, and M is an integer greater than or equal to 1.

51. The method according to claim 49, wherein the method further comprises:
receiving, by the terminal device, at least one piece of third indication information, wherein the at least one piece of third indication information indicates scheduling information of each of the N PDSCHs.

52. The method according to claim 51, wherein the third indication information comprises at least one of the following: the synchronization signal, a demodulation reference signal corresponding to the PDSCH, or a demodulation reference signal corresponding to the synchronization signal.

53. A communication apparatus, comprising: a unit configured to perform the method according to any one of claims 1 to 11, a unit configured to perform the method according to any one of claims 12 to 22, a unit configured to perform the method according to any one of claims 23 to 33, a unit configured to perform the method according to any one of claims 34 to 44, a unit configured to perform the method according to any one of claims 45 to 48, or a unit configured to perform the method according to any one of claims 49 to 52.

54. A communication apparatus, comprising a processor, wherein the processor is configured to cause the communication apparatus to perform the method according to any one of claims 1 to 11, cause the communication apparatus to perform the method according to any one of claims 12 to 22, cause the communication apparatus to perform the method according to any one of claims 23 to 33, cause the communication apparatus to perform the method according to any one of claims 34 to 44, cause the communication apparatus to perform the method according to any one of claims 45 to 48, or cause the communication apparatus to perform the method according to any one of claims 49 to 52.

55. The apparatus according to claim 54, wherein the apparatus further comprises a memory and/or a communication interface, wherein

the communication interface is coupled to the processor, and the communication interface is configured to input and/or output information; and
the memory is configured to store a computer program or instructions executed by the processor.

56. The apparatus according to any one of claims 53 to 55, wherein the apparatus is any one of the following: a communication device, a chip, a chip system, or a circuit.

57. A computer-readable storage medium, wherein the computer-readable storage medium stores a computer program or instructions; and when the computer program or the instructions are run on a communication apparatus, the communication apparatus is caused to perform the method according to any one of claims 1 to 11, the communication apparatus is caused to perform the method according to any one of claims 12 to 22, the communication apparatus is caused to perform the method according to any one of claims 23 to 33, the communication apparatus is caused to perform the method according to any one of claims 34 to 44, the communication apparatus is caused to perform the method according to any one of claims 45 to 48, or the communication apparatus is caused to perform the method according to any one of claims 49 to 52.

58. A computer program product, wherein the computer program product comprises a computer program or instructions used to perform the method according to any one of claims 1 to 11, the computer program product comprises a computer program or instructions used to perform the method according to any one of claims 12 to 22, the computer program product comprises a computer program or instructions used to perform the method according to any one of claims 23 to 33, the computer program product comprises a computer program or instructions used to perform the method according to any one of claims 34 to 44, the computer program product comprises a computer program or instructions used to perform the method according to any one of claims 45 to 48, or the computer program product comprises a computer program or instructions used to perform the method according to any one of claims 49 to 52.

100

FIG. 1

FIG. 2

20 ms: Initial access periodicity of a UE                    20 ms

| D | D | D | D | U | D | | U | D | D | D | D | U | D | | U |

| 0 | 1 | 2 | 3 | 4 | 5 | 6 | 7 |          | 0 | 1 | 2 | 3 | 4 | 5 | 6 | 7 |

SSB #0 PBCH    SSB #1 PBCH    SSB #2 PBCH        SSB #0 PBCH    SSB #1 PBCH    SSB #2 PBCH

SIB 1 PDCCH    SIB 1 PDCCH    SIB 1 PDCCH        SIB 1 PDCCH    SIB 1 PDCCH    SIB 1 PDCCH
SIB 1 PDSCH    SIB 1 PDSCH    SIB 1 PDSCH        SIB 1 PDSCH    SIB 1 PDSCH    SIB 1 PDSCH

FIG. 3

34

| Network device | Beam #0 | | | Beam #1 | ... | | Beam #K−1 | |
|---|---|---|---|---|---|---|---|---|

PDCCH #0  PDSCH #0  PDCCH #1  PDSCH #1  PDCCH #K−1  PDSCH #K−1

Terminal device

**FIG. 4**

500

A network device determines scheduling information of N PDSCHs, where the N PDSCHs include system information corresponding to N SSBs or N beams, the system information corresponding to the N SSBs or the N beams is system information sent in a same time window, the scheduling information of all of the N PDSCHs is the same, and N is an integer greater than 1 — 510

The network device sends the N PDSCHs — 520

**FIG. 5**

600

A network device sends N SSBs — 610

The network device sends M PDCCHs, where the M PDCCHs are used to schedule system information corresponding to the N SSBs or N beams, the system information corresponding to the N SSBs or the N beams is system information sent in a same time window, and information carried on the M PDCCHs is the same — 620

**FIG. 6**

FIG. 7

FIG. 8

FIG. 9

1000

A network device sends at least one piece of indication information #3, where the at least one piece of indication information #3 indicates scheduling information of N PDSCHs, the N PDSCHs include system information corresponding to N SSBs or N beams, and the system information corresponding to the N SSBs or the N beams is system information sent in a same time window

1010

The network device sends the N PDSCHs

1020

FIG. 10

Beam #0          Beam #1          ...          Beam #N–1

SSB #0           SSB #1           ...          SSB #N–1

System
information
corresponding        PDSCH          PDSCH          ...          PDSCH
to the N SSBs
                 Beam #0          Beam #1          ...          Beam #N–1

FIG. 11

1200

| Network device | | Terminal device |

1210: N SSBs

1220: M PDCCHs

1230: N PDSCHs, including
system information
corresponding to the N SSBs

1240: Perform signal transmission with the network
device based on at least one piece of system information

FIG. 12

1300

Transceiver unit 1310

Processing unit 1320

FIG. 13

1400

Processor 1410 ——— Transceiver 1430

Memory 1420

FIG. 14

Chip system 1500

Logic circuit 1510

Input/Output
interface 1520

FIG. 15

## INTERNATIONAL SEARCH REPORT

| International application No. |
| --- |
| **PCT/CN2024/114135** |

### A. CLASSIFICATION OF SUBJECT MATTER

H04W 72/044(2023.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, WPABS, 3GPP: 同步信号块, 物理下行控制信道, 物理下行共享信道, 波束, 时域, 频域, 车到万物, 设备到设备, 物联网, SSB, PSS, SSS, MIB, PDCCH, PDSCH, beam, time, frequency, V2X, D2D, IoT,

### C. DOCUMENTS CONSIDERED TO BE RELEVANT

| Category* | Citation of document, with indication, where appropriate, of the relevant passages | Relevant to claim No. |
| --- | --- | --- |
| Y | CN 116156636 A (HUAWEI TECHNOLOGIES CO., LTD.) 23 May 2023 (2023-05-23) description, paragraphs 98-198 | 1-58 |
| Y | CN 116437424 A (HUAWEI TECHNOLOGIES CO., LTD.) 14 July 2023 (2023-07-14) description, paragraphs 121-208 | 1-58 |
| A | CN 114501671 A (HUAWEI TECHNOLOGIES CO., LTD.) 13 May 2022 (2022-05-13) entire document | 1-58 |
| A | CN 116097787 A (HUAWEI TECHNOLOGIES CO., LTD.) 09 May 2023 (2023-05-09) entire document | 1-58 |
| A | CN 116761256 A (HUAWEI TECHNOLOGIES CO., LTD.) 15 September 2023 (2023-09-15) entire document | 1-58 |
| A | US 2019357170 A1 (BEIJING XIAOMI MOBILE SOFTWARE CO., LTD.) 21 November 2019 (2019-11-21) entire document | 1-58 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 October 2024** | **14 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/114135**

| Patent document cited in search report | | | Publication date (day/month/year) | Patent family member(s) | | | Publication date (day/month/year) |
|---|---|---|---|---|---|---|---|
| CN | 116156636 | A | 23 May 2023 | None | | | |
| CN | 116437424 | A | 14 July 2023 | None | | | |
| CN | 114501671 | A | 13 May 2022 | None | | | |
| CN | 116097787 | A | 09 May 2023 | None | | | |
| CN | 116761256 | A | 15 September 2023 | None | | | |
| US | 2019357170 | A1 | 21 November 2019 | US | 10813079 | B2 | 20 October 2020 |
| | | | | WO | 2018126512 | A1 | 12 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311240906